(19) Europäisches Patentamt
European Patent Office
Office européen des brevets

(11) **EP 4 580 266 A1**

(12) **EUROPEAN PATENT APPLICATION**
published in accordance with Art. 153(4) EPC

(43) Date of publication:
**02.07.2025 Bulletin 2025/27**

(21) Application number: **23857042.8**

(22) Date of filing: **19.07.2023**

(51) International Patent Classification (IPC):
*H04W 52/18* (2009.01)    *H04W 28/16* (2009.01)
*H04W 72/21* (2023.01)

(52) Cooperative Patent Classification (CPC):
**H04W 28/16; H04W 52/18; H04W 72/21**

(86) International application number:
**PCT/JP2023/026409**

(87) International publication number:
**WO 2024/042926 (29.02.2024 Gazette 2024/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.08.2022 JP 2022132835**

(71) Applicant: **NTT DOCOMO, INC.**
**Tokyo 100-6150 (JP)**

(72) Inventors:
• **MATSUMURA, Yuki**
  **Tokyo 100-6150 (JP)**
• **NAGATA, Satoshi**
  **Tokyo 100-6150 (JP)**
• **SUN, Weiqi**
  **Beijing 100190 (CN)**
• **WANG, Jing**
  **Beijing 100190 (CN)**
• **CHEN, Lan**
  **Beijing 100190 (CN)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57)    A terminal according to one aspect of the present disclosure includes a receiving section that receives first information and second information for transmission power control of a plurality of sounding reference signals (SRSs) using a plurality of transmission/reception points (TRPs), and a control section that controls a transmission power of an SRS corresponding to a first TRP of the plurality of TRPs, based on the first information, and controls a transmission power of an SRS corresponding to a second TRP of the plurality of TRPs, based on the second information, when a unified Transmission Configuration Indication (TCI) state is not indicated. According to one aspect of the present disclosure, it is possible to appropriately perform transmission power control.

```
BWP-UplinkDedicated ::=        SEQUENCE {
......
  ul-TCI-StateList-r17          CHOICE {
    explicitlist                SEQUENCE {
      ul-TCI-ToAddModList-r17       SEQUENCE (SIZE (1..maxUL-TCI-r17)) OF TCI-UL-State-r17      OPTIONAL,  -- Need N
      ul-TCI-ToReleaseList-r17      SEQUENCE (SIZE (1..maxUL-TCI-r17)) OF TCI-UL-State-Id-r17   OPTIONAL   -- Need N
    },
    unifiedTCI-StateRef-r17       ServingCellAndBWP-Id-r17
  }                                                                                             OPTIONAL,  -- Need R
  ul-powerControl-r17           Uplink-powerControlId-r17                                       OPTIONAL,  -- Cond
  NoTCI-PC   -> Rel-17 parameter is used for TRP1
  ul-powerControl-TRP2-r18  Uplink-powerControlId-r17                                           OPTIONAL,  -- Cond
  NoTCI-PC   -> new Rel-18 parameter is used for TRP2
......
}
```

FIG. 6

EP 4 580 266 A1

**Description**

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of LTE (Third Generation Partnership Project (3GPP (registered trademark)) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

For future radio communication systems (for example, NR), it is studied that a user terminal (terminal, User Equipment (UE)) controls transmission/reception processing, based on information related to quasi-co-location (QCL) (QCL assumption / Transmission Configuration Indication (TCI) state / spatial relation).

It is also studied to indicate a TCI state(s) applicable to a plurality of types of signals (channels/reference signals) in transmission/reception of channels/signals using a plurality of transmission/reception points (TRPs), by downlink control information.

In future radio communication systems, a UE can use one of multi-panel (or multi-beam) for uplink (UL) transmission. For improvement of UL throughput/reliability, it is studied to support simultaneous UL transmission using multiple panels (for example, simultaneous multi-panel UL transmission (SiMPUL), simultaneous UL transmission from multiple panels (STxMP)) for one or more transmission/reception points (TRPs).

Sufficient study has not been performed about transmission power control related to UL transmission in a case where the UL transmission is performed by using a TCI state(s) applicable to a plurality of types of signals (channels/reference signals) by using multiple TRPs and a case where multi-panel simultaneous UL transmission is supported. Unless this is studied sufficiently, transmission control is not appropriately performed, which may reduce communication throughput.

Thus, an object of the present disclosure is to provide a terminal, a radio communication method, and a base station that enable appropriate transmission power control.

Solution to Problem

A terminal according to one aspect of the present disclosure includes: a receiving section that receives first information and second information for transmission power control of a plurality of sounding reference signals (SRSs) using a plurality of transmission/reception points (TRPs); and a control section that controls a transmission power of an SRS corresponding to a first TRP of the plurality of TRPs, based on the first information, and controls a transmission power of an SRS corresponding to a second TRP of the plurality of TRPs, based on the second information, when a unified Transmission Configuration Indication (TCI) state is not indicated.

Advantageous Effects of Invention

According to one aspect of the present disclosure, it is possible to appropriately perform transmission power control.

Brief Description of Drawings

[FIG. 1] FIG. 1A and FIG. 1B show examples of a unified/common TCI framework.
[FIG. 2] FIG. 2A and FIG. 2B show examples of DCI-based TCI state indication.
[FIG. 3] FIG. 3A to FIG. 3C are diagrams to show examples of PUSCH transmission using multiple panels.
[FIG. 4] FIG. 4A and FIG. 4B are diagrams to show examples of PUCCH transmission using multiple panels.
[FIG. 5] FIG. 5A and FIG. 5B are diagrams to show examples of a UL power control parameter in Rel. 17.
[FIG. 6] FIG. 6 is a diagram to show an example of UL power control parameters according to structure A.
[FIG. 7] FIG. 7 is a diagram to show an example of UL power control parameters according to structure B.
[FIG. 8] FIG. 8 is a diagram to show an example of a schematic structure of a radio communication system according to one embodiment.
[FIG. 9] FIG. 9 is a diagram to show an example of a structure of a base station according to one embodiment.
[FIG. 10] FIG. 10 is a diagram to show an example of a structure of a user terminal according to one embodiment.
[FIG. 11] FIG. 11 is a diagram to show an example of a hardware structure of the base station and the user terminal according to one embodiment.
[FIG. 12] FIG. 12 is a diagram to show an example of a vehicle according to one embodiment.

Description of Embodiments

(TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) is under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/-channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have a different parameter(s) (or a parameter set(s)) that can be assumed to be the same.

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a given channel/signal, and this RS may be referred to as a QCL source of QCL type X in the TCI state.

{{Physical Layer Procedure for Data/Antenna Port QCL}}

A UE can be configured with a list of up to M TCI-State (TCI state) configurations in a higher layer parameter PDSCH-Config for decoding of a PDSCH, according to a detected PDCCH with DCI targeting the UE and a given serving cell. Here, M depends on UE capability maxNumberConfiguredTCIstatesPerCC.

Each TCI-State includes a parameter for configuration of a QCL relationship between one or two downlink reference signals and a DMRS port of the PDSCH, a DMRS port of the PDCCH, or a CSI-RS port of a CSI-RS resource. The QCL relationship is configured by a higher layer parameter qcl-Type1 for a first DL RS and a higher layer parameter qcl-Type2 for a second DL RS (if configured).

In the two DL RS cases, a plurality of QCL types are not the same irrespective of whether reference is reference to the same DL RS or reference to different DL RSs. The QCL type corresponding to each DL RS is given by a higher layer parameter qcl-Type in QCL-Info and takes a value corresponding to one of the following.

- 'typeA': {Doppler shift, Doppler spread, average delay, delay spread}
- 'typeB': {Doppler shift, Doppler spread}
- 'typeC': {Doppler shift, average delay}
- 'typeD': {Spatial Rx parameter}

{{RRC Protocol Specification/RRC IE/TCI State}}

TCI-State (TCI state) associates one or two DL reference signals (RSs) with a corresponding QCL type. If an additional physical cell identifier (PCI) is configured for the RS(s), the same value is configured for both of the DL RSs.

(Unified/common TCI Framework)

With a unified TCI framework, a plurality of types of (UL/DL) channels/RSs can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam / unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be a plurality of TCI states configured by an RRC parameter or a plurality of TCI states (active TCI states, active TCI pool, set) activated by a MAC CE among the plurality of TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number

N ($\geq$ 1) of TCI states to be applied to a UL channel/RS (UL TCI states) and the number M ($\geq$ 1) of TCI states to be applied to a DL channel/RS (DL TCI state) may be defined. At least one of N and M may be notified/configured/indicated to a UE via higher layer signaling/physical layer signaling.

In the present disclosure, when it is described as N = M = X (where X is any integer), this may mean that X TCI states (corresponding to X TRPs) common to UL and DL (joint TCI states) are notified/configured/indicated to a UE. When it is described as N = X (where X is any integer) and M = Y (where Y is any integer, Y may be equal to X (Y = X)), this may mean that X UL TCI state(s) (corresponding to X TRP(s)) and Y DL TCI state(s) (corresponding to Y TRP(s)) (i.e., separate TCI states) are notified/configured/indicated to a UE.

For example, when it is described as N = M = 1, this may mean that one TCI state common to DL and UL for a single TRP is notified/configured/indicated to a UE (joint TCI state for a single TRP).

For example, when it is described as N = 1 and M = 1, this may mean that one UL TCI state and one DL TCI state for a single TRP are separately notified/configured/indicated to a UE (separate TCI states for a single TRP).

For example, when it is described as N = M = 2, this may mean that a plurality of (two) TCI states common to UL and DL for a plurality of (two) TRPs are notified/configured/indicated to a UE (joint TCI states for a plurality of TRPs).

For example, when it is described as N = 2 and M = 2, this may mean that a plurality of (two) UL TCI states and a plurality of (two) DL TCI states for a plurality of (two) TRPs are notified/configured/indicated to a UE (separate TCI states for a plurality of TRPs).

Note that, in the above examples, cases where the values of N and M are each one or two have been described, but the values of N and M may each be three or more, and N and M may be different from each other.

It is studied to support N = M = 1 in Rel. 17. It is studied to support a different case in Rel. 18 or later versions.

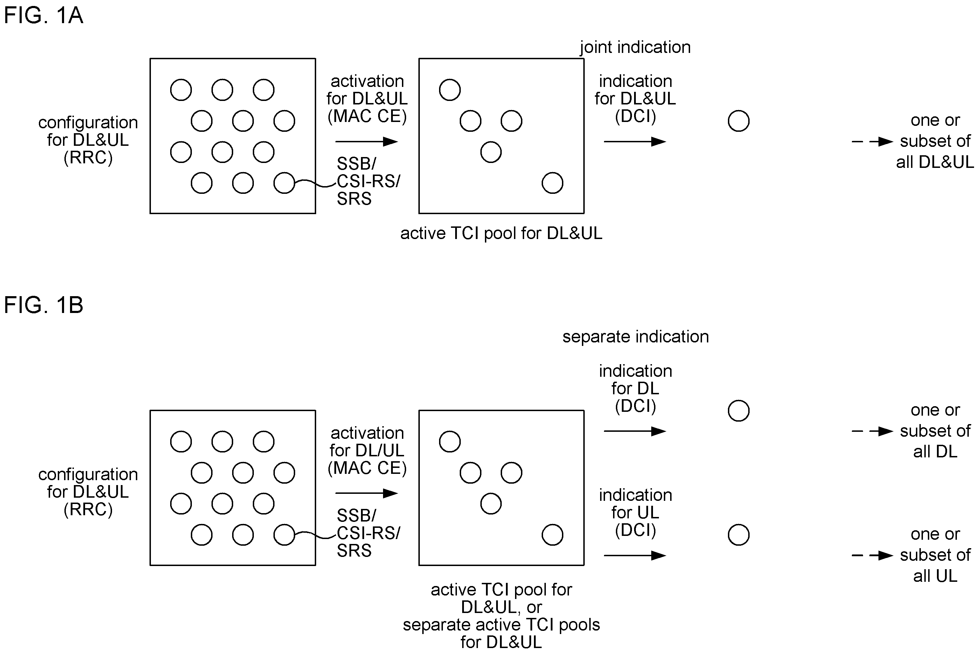

In the example in FIG. 1A, an RRC parameter (information element) configures a plurality of TCI states for both DL and UL. The MAC CE may activate a plurality of TCI states among the plurality of configured TCI states. DCI may indicate one of the plurality of activated TCI states. The DCI may be UL/DL DCI. The indicated TCI state may be applied to at least one (or all) of UL/DL channels/RSs. One piece of DCI may indicate both a UL TCI and a DL TCI.

In the example in FIG. 1A, one dot may be one TCI state applied to both UL and DL or may be two respective TCI states applied to UL and DL.

At least one of the plurality of TCI states configured by the RRC parameter and the plurality of TCI states activated by the MAC CE may be referred to as a TCI pool (common TCI pool, joint TCI pool, TCI state pool). The plurality of TCI states activated by the MAC CE may be referred to as an active TCI pool (active common TCI pool).

Note that, in the present disclosure, a higher layer parameter (RRC parameter) that configures a plurality of TCI states may be referred to as configuration information that configures a plurality of TCI states or simply as "configuration information." In the present disclosure, one of a plurality of TCI states being indicated by using DCI may be receiving indication information indicating one of a plurality of TCI states included in DCI or may simply be receiving "indication information."

In the example in FIG. 1B, an RRC parameter configures a plurality of TCI states for both DL and UL (joint common TCI pool). A MAC CE may activate a plurality of TCI states (active TCI pool) among the plurality of configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

In Rel-17 NR or later versions, it is assumed that activation/indication of a beam to a TCI state associated with a different physical cell identifier (PCI) by a MAC CE/DCI is supported. In Rel-18 NR or later versions, it is assumed that indication of a change of a serving cell to a cell having a different PCI by a MAC CE/DCI is supported.

{{Physical Layer Procedure for Data/Antenna Port QCL}}

To provide a reference signal for a DMRS of a PDSCH and a DMRS of a PDCCH in a given CC and a CSI-RS, and further if a UL TX (transmission) spatial filter for dynamic grant and configured grant based PUSCH and PUCCH resources in the given CC and an SRS is available, a UE can be configured with a list of up to 128 DLorJointTCIState (DL or joint TCI state) configurations in PDSCH-Config (PDSCH configuration) to provide reference for determination of the UL TX spatial filter.

If no DLorJointTCIState or UL-TCIState (UL TCI state) configuration is present in a BWP in the CC, the UE can apply a DLorJointTCIState or UL-TCIState configuration from a reference BWP of a reference CC. If the UE is configured with DLorJointTCIState or UL-TCIState is configured in any CC in the same band, the UE does not assume to be configured with TCI-State, SpatialRelationInfo (spatial relation information), and PUCCH-SpatialRelationInfo (PUCCH spatial relation information) excluding SpatialRelationInfoPos (spatial relation information for position) in the band. The UE assumes that, when the UE is configured with TCI-State in any CC in a CC list by simultaneousTCI-UpdateList1-r16 (simultaneous TCI update list 1), simultaneousTCI-UpdateList2-r16 (simultaneous TCI update list 2), simultaneousSpatial-UpdatedList1-r16 (simultaneous spatial update list 1), or simultaneousSpatial-UpdatedList2-r16 (simultaneous spatial update list 2), the UE is not configured with DLorJointTCIState or UL-TCIState in the any CC in the CC.

The UE receives an activation command to be used for mapping up to eight TCI states and/or pairs of TCI states with one TCI state for a DL channel/signal and one TCI state for a UL channel/signal, to a codepoint of a DCI field 'Transmission Configuration Indication' (TCI) for one of a CC/DL BWP or a set of CCs/DL BWPs, if available. When a set of TCI state IDs is activated for the set of CCs/DL BWPs, and further for one CC/DL BWP if available, the same set of TCI state IDs is applied to all the DL and/or UL BWPs in the indicated CC. Here, an applicable-CC list is determined by the CC indicated in the activation command. If the activation command maps DLorJointTCIState and/or UL-TCIState to only one TCI codepoint, the UE applies indicated DLorJointTCIState and/or UL-TCIState to the one CC/DL BWP or the set of CCs/DL BWPs. If indicated mapping for a single TCI codepoint is applied, the UE applies indicated DLorJointTCIState and/or UL-TCIState to the one CC/DL BWP or the set of CCs/DL BWPs.

When bwp-id or cell for a QCL type A/D source RS in QCL-Info of a TCI state configured with DLorJointTCIState is not configured, the UE assumes that the QCL type A/D source RS is configured in the CC/DL BWP applied with the TCI state.

(Indication of TCI State)

A Rel-17 unified TCI framework supports modes 1 to 3 below.

{Mode 1} MAC CE based TCI state indication
{Mode 2} DCI based TCI state indication with DL assignment (DCI based TCI state indication by DCI format 1_1/1_2 with DL assignment)
{Mode 3} DCI based TCI state indication without DL assignment (DCI based TCI state indication by DCI format 1_1/1_2 without DL assignment)

A UE with a TCI state configured and activated with a Rel-17 TCI state ID (for example, tci-StateId_r17) receives DCI format 1_1/1_2 providing an indicated TCI state with a Rel-17 TCI state ID for one CC or receives DCI format 1_1/1_2 providing an indicated TCI state with a Rel-17 TCI state ID for all the CCs in the same CC list as a CC list configured by simultaneous TCI update list 1 or simultaneous TCI update list 2 (for example, simultaneousTCI-UpdateList1 or simultaneousTCI-UpdateList2). DCI format 1_1/1_2 may be with or without DL assignment if available.

If DCI format 1_1/1_2 is without DL assignment, the UE can assume (validate) the following for the DCI.

- A CS-RNTI is used for CRC-scrambling for DCI.
- Values of the following DCI fields (special fields) are set as follows:

    - A redundancy version (RV) field is set at all '1's.
    - A modulation and coding scheme (MCS) field is set at all '1's.
    - A new data indicator (NDI) field is set at 0.
    - A frequency domain resource assignment (FDRA) field is set at all '0's for FDRA type 0, all '1's for FDRA type 1, or all '0's for dynamic switch (DynamicSwitch) (as validation of a PDCCH of release of DL semi-persistent scheduling (SPS) or UL grant type 2 scheduling).

Note that DCI in mode 2/mode 3 above may be referred to as beam indication DCI.

In Rel. 15/16, if a UE does not support active BWP change via DCI, the UE ignores a BWP indicator field. A similar operation is studied for a relationship between support of a Rel-17 TCI state and interpretation of a TCI field. It is studied that a TCI field is always present in DCI format 1_1/1_2 if a UE is configured with a Rel-17 TCI state and that the UE ignores a TCI field if the UE does not support TCI update via DCI.

In Rel.15/16, whether or not a TCI field is present (TCI presence in DCI information, tci-PresentInDCI) is configured for each CORESET.

A TCI field in DCI format 1_1 is 0 bits when a higher layer parameter tci-PresentInDCI is not enabled, and is 3 bits otherwise. If a BWP indicator field indicates a BWP other than an active BWP, the UE follows the following operation.

{Operation} If the higher layer parameter tci-PresentInDCI is not enabled for a CORESET used for a PDCCH communicating DCI format 1_1, the UE assumes that tci-PresentInDCI is not enabled for all the CORESETs in the indicated BWP. Otherwise, the UE assumes that tci-PresentInDCI is enabled for all the CORESETs in the indicated BWP.

A TCI field in DCI format 1_2 is 0 bits when a higher layer parameter tci-PresentInDCI-1-2 is not configured, and otherwise, is 1, 2, or 3 bits determined by the higher layer parameter tci-PresentInDCI-1-2. If a BWP indicator field indicates a BWP other than an active BWP, the UE follows the following operation.

{Operation} If the higher layer parameter tci-PresentInDCI-1-2 is not configured for a CORESET used for a PDCCH communicating DCI format 1_2, the UE assumes that tci-PresentInDCI is not enabled for all the CORESETs in the indicated BWP. Otherwise, the UE assumes that tci-PresentInDCI-1-2 is configured with the same value as tci-PresentInDCI-1-2 configured for the CORESET used for the PDCCH communicating DCI format 1_2, for all the CORESETs in the indicated BWP.

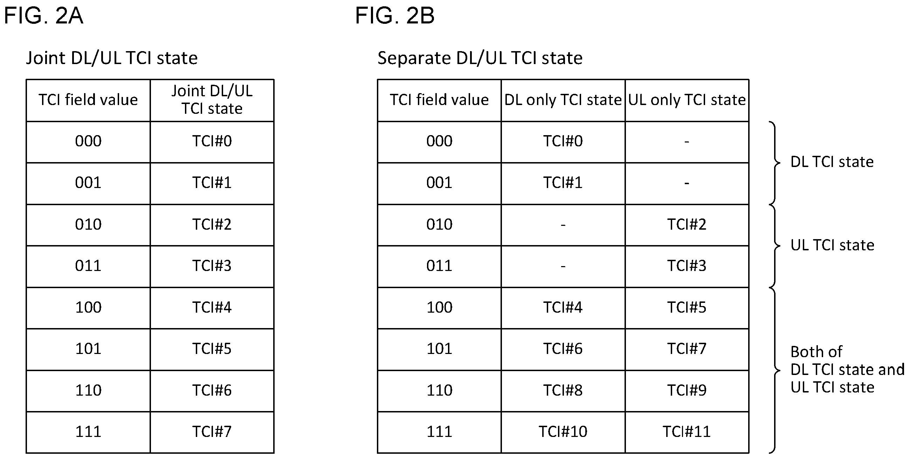

FIG. 2A shows an example of DCI-based joint DL/UL TCI state indication. A TCI state ID indicating a joint DL/UL TCI state is associated with each value of a TCI field for joint DL/UL TCI state indication.

FIG. 2B shows an example of DCI-based separate DL/UL TCI state indication. At least one TCI state ID of a TCI state ID indicating only a DL TCI state and a TCI state ID indicating only a UL TCI state are associated with each value of a TCI field for separate DL/UL TCI state indication is associated with each value of a TCI field. In this example, TCI field values 000 and 001 are each associated with only one TCI state ID for DL, TCI field values 010 and 011 are each associated with only one TCI state ID for UL, and TCI field values 100 to 111 are each associated with both one TCI state ID for DL and one TCI state ID for UL.

(Indicated TCI State/Configured TCI State)

For a Rel-17 TCI state, a unified/common TCI state may mean a Rel-17 TCI state indicated by using (Rel-17) DCI/MAC CE/RRC (indicated Rel-17 TCI state (indicated Rel. 17 TCI state)).

In the present disclosure, an indicated Rel-17 TCI state, an indicated TCI state, a unified/common TCI state, a TCI state applied to a plurality of types of signals (channels/RSs), a TCI state for a plurality of types of signals (channels/RSs) may be interchangeably interpreted.

An indicated Rel-17 TCI state may be shared with at least one of UE-specific reception in a PDSCH/PDCCH (updated by using Rel-17 DCI/MAC CE/RRC), dynamic grant (DCI)/configured grant PUSCH, and a plurality of (for example, all) dedicated PUCCH resources. A TCI state indicated by DCI/MAC CE/RRC may be referred to as an indicated TCI state and a unified TCI state.

For a Rel-17 TCI state, a TCI state other than a unified TCI state may mean a Rel-17 TCI state configured by using a (Rel-17) MAC CE/RRC (configured Rel-17 TCI state (configured Rel.17 TCI state)). In the present disclosure, a configured Rel-17 TCI state, a configured TCI state, a TCI state other than a unified TCI state, and a TCI state applied to a specific type of signal (channel/RS) may be interchangeably interpreted.

A configured Rel-17 TCI state need not be shared with at least one of UE-specific reception in a PDSCH/PDCCH (updated by using Rel-17 DCI/MAC CE/RRC), dynamic grant (DCI)/configured grant PUSCH, and a plurality of (for example, all) dedicated PUCCH resources. A configured Rel-17 TCI state may be configured by RRC/MAC CE for each CORESET/each resource/each resource set to update the indicated Rel-17 TCI state (common TCI state) described above, or a configured Rel-17 TCI state may be configured not to be updated.

It is studied to apply an indicated Rel-17 TCI state to a UE-specific channel/signal (RS). It is also studied to notify a UE of which of an indicated Rel-17 TCI state and a configured Rel-17 TCI state is to be applied to a non-UE-specific channel/signal, by using higher layer signaling (RRC signaling).

It is studied that an RRC parameter related to a configured Rel-17 TCI state (TCI state ID) has the same configuration as that of an RRC parameter for a TCI state in Rel. 15/16. It is studied that a configured Rel-17 TCI state is configured/indicated by RRC/MAC CE for each CORESET/each resource/each resource set. It is also studied that, for the configuration/indication, a UE makes determination, based on a specific parameter.

It is studied to perform update of an indicated TCI state and update of a configured TCI state separately for a UE. For example, for a UE, when a unified TCI state for an indicated TCI state is updated, update of a configured TCI state need not be performed. It is also studied that, for the update, the UE makes determination, based on a specific parameter.

It is studied to switch, for a PDCCH/PDSCH, whether an indicated Rel-17 TCI state is applied or an indicated Rel-17 TCI state is not applied (whether a configured Rel-17 TCI state is applied or a TCI state configured separately from the indicated Rel-17 TCI state is applied), by using higher layer signaling (RRC/MAC CE).

It is studied to support, for intra-cell beam indication (indication of a TCI state), an indicated Rel-17 TCI state for a UE-specific CORESET and a PDSCH related to the CORESET and a non-UE-specific CORESET and a PDSCH related to the CORESET.

It is studied to support, for inter-cell beam indication (for example, L1/L2 inter-cell mobility), an indicated Rel-17 TCI state for a UE-specific CORESET and a PDSCH related to the CORESET.

In Rel. 15, whether to indicate a TCI state for CORESET #0 depends on implementation of a base station. In Rel. 15, to CORESET #0 indicated with a TCI state, the indicated TCI state is applied. To CORESET #0 not indicated with a TCI state, the same QCL as that of an SSB selected at the time of the latest (most recent) PRACH transmission is applied.

For a unified TCI state framework of Rel. 17 or later versions, a TCI state related to CORESET #0 is studied.

For example, in a unified TCI state framework of Rel. 17 or later versions, for Rel-17 TCI state indication of CORESET #0, whether to apply an indicated Rel-17 TCI state associated with a serving cell may be configured for each CORESET by RRC, and when the indicated Rel-17 TCI state is not applied, an existing MAC CE/RACH signaling mechanism (legacy MAC CE/RACH signalling mechanism) may be used.

Note that a CSI-RS related to a Rel-17 TCI state applied to CORESET #0 may be QCLed with an SSB related to a serving cell PCI (physical cell ID) (as in Rel. 15).

For CORESET #0, a CORESET with a common search space (CSS), and a CORESET with a CSS and a UE-specific search space (USS), whether or not to follow an indicated Rel-17 TCI state may be configured for each CORESET by an RRC parameter. When following an indicated Rel-17 TCI state is not configured for the CORESET, a configured Rel-17 TCI state may be applied to the CORESET.

For a non-UE-dedicated channel/RS (excluding a CORESET), whether or not to follow an indicated Rel-17 TCI state may be configured for each channel/resource/resource set by an RRC parameter. For the channel/resource/resource set, when following an indicated Rel-17 TCI state is not configured, a configured Rel-17 TCI state may be applied to the channel/resource/resource set.

(Multi-panel Transmission)

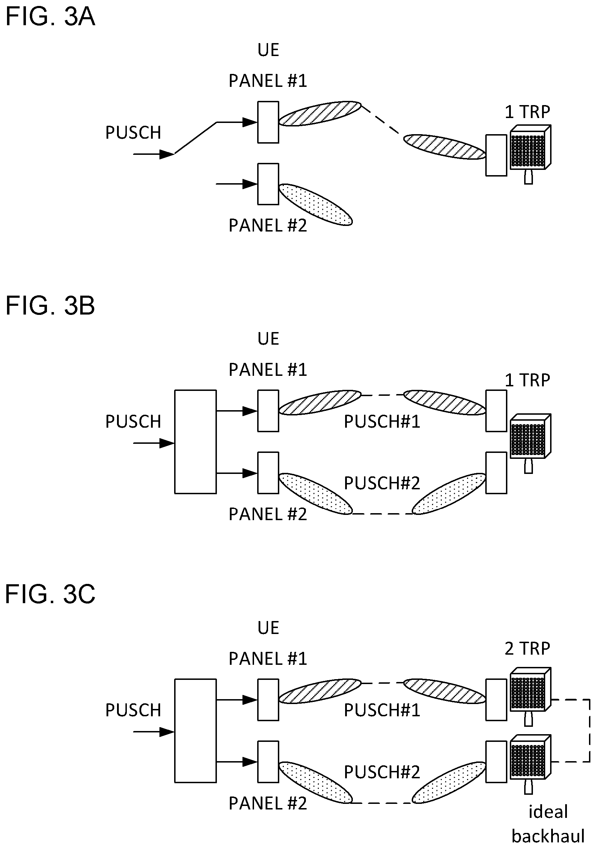

In a Rel-15 or Rel-16 UE, only one beam and only one panel are used for UL transmission at one time point (FIG. 3A). In Rel. 17, for improvement of UL throughput and reliability, simultaneous UL transmission of multi-beam (multiple beams) and multi-panel (multiple panels) to one or more transmission/reception points (TRPs) is studied.

For such simultaneous UL transmission using multi-beam and multi-panel, reception by one TRP having multi-panel (FIG. 3B) or reception by two TRPs having ideal backhaul (FIG. 3C) is studied. A single PDCCH for scheduling of multiple PUSCHs (for example, simultaneous transmission of PUSCH #1 and PUSCH #2) is studied. Supporting of panel-specific transmission and introduction of a panel ID are studied.

A base station may use UL transmission configuration indication (TCI) or a panel ID to configure or indicate panel-specific transmission for UL transmission. UL TCI (UL TCI state) may be based on signaling similar to DL beam indication supported in Rel. 15. The panel ID may be implicitly or explicitly applied to transmission of at least one of a target RS resource or a target RS resource set, a PUCCH, an SRS, and a PRACH. When a panel ID is explicitly notified, the panel ID may be configured in at least one of a target RS, a target channel, and a reference RS (for example, a DL RS resource configuration or spatial relation information).

In simultaneous UL transmission using multi-panel, a UE may perform transmission of a plurality of physical uplink control channels (PUCCHs). As a transmission scheme for such simultaneous UL transmission using multi-panel for PUCCH, schemes 1 and 2 below are studied.

{Scheme 1}

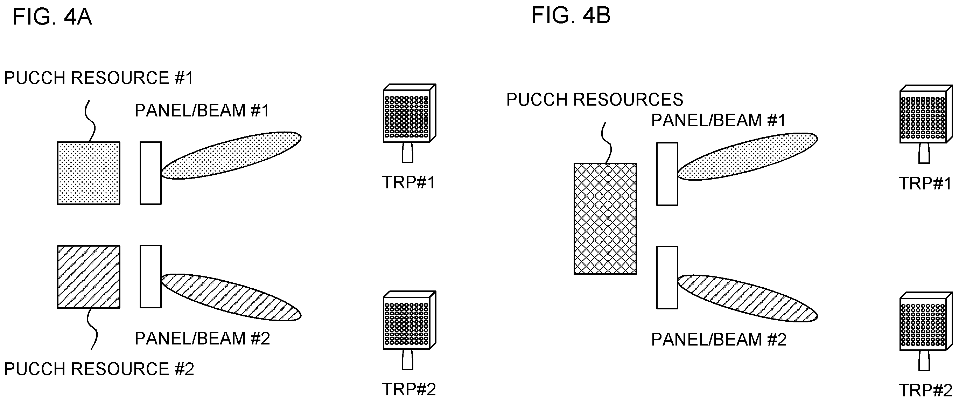

Two PUCCH resources overlap in the time domain and are transmitted simultaneously. Each of the two PUCCH resources is associated with one different panel/beam (see FIG. 4A). The two beams are transmitted toward respective TRPs.

{Scheme 2}

One PUCCH resource is simultaneously transmitted by using two panels/spatial relations. The one PUCCH resource is associated with two panels/beams (see FIG. 4B). The two beams are transmitted toward respective TRPs.

Note that, although description has been given by taking a case where the number of multi-panel is two, the number of panels may be three or more in the present disclosure. In other words, two, which is the number of panels, may be interpreted as a number being three or larger.

Note that scheme 2 may be applied to SFN (single frequency network) PUCCH repetition transmission (repetition).

(UL TCI State)

In Rel-16 NR, using a UL TCI state as a UL beam indication method is studied. Notification of a UL TCI state is similar to notification of a DL beam (DL TCI state) of a UE. Note that a DL TCI state and a TCI state for PDCCH/PDSCH may be interchangeably interpreted.

A channel/signal (which may be referred to as a target channel/RS) configured (indicated) with a UL TCI state may be at least one of a PUSCH (DMRS of a PUSCH), a PUCCH (DMRS of a PUCCH), a random access channel (Physical Random Access Channel (PRACH)), an SRS, and the like, for example.

An RS (source RS) having a QCL relationship with the channel/signal may be a DL RS (for example, an SSB, a CSI-RS, a TRS, or the like) or a UL RS (for example, an SRS, an SRS for beam management, or the like), for example.

In a UL TCI state, an RS having a QCL relationship with the channel/signal may be associated with a panel ID for reception or transmission of the RS. The association may be explicitly configured (or indicated) by higher layer signaling (for example, RRC signaling, MAC CE, or the like) or may be implicitly determined.

The correspondence between the RS and the panel ID may be included in UL TCI state information for configuration or may be included in at least one of resource configuration information, spatial relation information, and the like of the RS for configuration.

A QCL type indicated by a UL TCI state may be any of existing QCL types A to D, may be anther QCL type, or may include a given spatial relation, an associated antenna port (port index), and the like.

When an associated panel ID is indicated (for example, indicated by DCI) for UL transmission, the UE may perform the UL transmission by using a panel corresponding to the panel ID. The panel ID may be associated with a UL TCI state, and when the UL TCI state is indicated (or activated) for a given UL channel/signal, the UE may identify a panel to use for the UL channel/signal transmission according to the panel ID associated with the UL TCI state.

(Transmission Power Control)

<Transmission Power Control for PUSCH>

In NR (for example, Rel. 16), a transmission power of a PUSCH is controlled based on a TPC command (also referred to as a value, an increase/decrease value, a correction value, and the like) indicated by a value of a given field (also referred to as a TPC command field and the like) in DCI.

For example, when a UE uses a parameter set (open-loop parameter set) having an index j and an index l of a power control adjustment state to transmit a PUSCH in an active UL BWP b of a carrier f in a serving cell c, transmission power ($P_{\text{PUSCH},b,f,c}(i,j,q_d,l)$) of a PUSCH in a PUSCH transmission occasion (also referred to as a transmission period and the like) i may be expressed by equation (1) below.

[Math. 1]

$$P_{\text{PUSCH}b,f,c}(i,j,q_d,l) =$$

$$= \min \begin{Bmatrix} P_{\text{CMAX},f,c}(i), \\ P_{\text{O\_PUSCH}b,f,c}(j) + 10\log_{10}(2^{\mu} \cdot M_{\text{RB},b,f,c}^{\text{PUSCH}}(i)) + \alpha_{b,f,c}(j) \cdot PL_{b,f,c}(q_d) + \Delta_{\text{TF},b,f,c}(i) + f_{b,f,c}(i,l) \end{Bmatrix} \; [\text{dBm}]$$

$$(1)$$

Here, the power control adjustment state may be configured to have a plurality of states (for example, two states) or have a single state, by a higher layer parameter. When a plurality of power control adjustment states are configured, one of the plurality of power control adjustment states may be identified by the index l (for example, $l \in \{0, 1\}$). The power control adjustment state may be referred to as a PUSCH power control adjustment state, a first or second state, and the like.

The PUSCH transmission occasion i is a given period in which a PUSCH is transmitted and may be constituted of one or more symbols, one or more slots, or the like, for example.

In equation (1), $P_{\text{CMAX},f,c}(i)$ is, for example, a transmission power (also referred to as a maximum transmission power, a UE maximum output power, and the like) of a user terminal configured for the carrier f of the serving cell c in the transmission occasion i. $P_{\text{O\_PUSCH},b,f,c}(j)$ is, for example, a parameter related to a target received power configured for the active UL BWP b in the carrier f of the serving cell c in a parameter set configuration j (for example, also referred to as a parameter related to a transmission power offset, a transmission power offset P0, a target received power parameter, and the like).

$M_{\text{RB},b,f,c}^{\text{PUSCH}}(i)$ is, for example, the number of resource blocks (bandwidth) allocated to a PUSCH for the transmission occasion i in the active UL BWP b in the carrier f of the serving cell c with subcarrier spacing $\mu$. $\alpha_{b,f,c}(j)$ is a value provided by a higher layer parameter (for example, also referred to as msg3-Alpha, p0-PUSCH-Alpha, a fractional factor, and the like).

$PL_{b,f,c}(q_d)$ is, for example, pathloss compensation calculated by the user terminal by using an index $q_d$ of a reference signal (pathloss reference RS, DL-RS for pathloss measurement, PUSCH-PathlossReferenceRS) for downlink BWP associated with the active UL BWP b in the carrier f of the serving cell c.

$\Delta_{\text{TF},b,f,c}(i)$ is a transmission power adjustment component (offset, transmission format compensation) for the UL BWP b in the carrier f of the serving cell c.

$f_{b,f,c}(i,l)$ is a value based on the TPC command with the power control adjustment state index l of the active UL BWP in the carrier f of the serving cell c and the transmission occasion i (for example, a power control adjustment state, an accumulated TPC command value, or a closed loop value). l may be referred to as a closed loop index.

When the UE is not provided with a pathloss reference RS (for example, PUSCH-PathlossReferenceRS) or the UE is not provided with a dedicated higher layer parameter, the UE may calculate $PL_{b,f,c}(q_d)$ by using an RS resource, based on an SSB used for obtaining a Master Information Block (MIB).

When the UE is configured with RS resource indices up to the number corresponding to the value of the maximum number of pathloss reference RSs (for example, maxNrofPUSCH-PathlossReferenceRS) and a set of RS configurations for each of the RS resource indices by pathloss reference RSs, the set of RS resource indices may include one of or both a set of SS/PBCH block indices and a set of CSI-RS resource indices. The UE may identify an RS resource index $q_d$ in the set of RS resource indices.

When PUSCH transmission is scheduled by a Random Access Response (RAR) UL grant, the UE may use the same RS resource index $q_d$ as that for corresponding PRACH transmission.

When the UE is provided with a configuration of power control of a PUSCH by a sounding reference signal (SRS) resource indicator (SRI) (for example, SRI-PUSCH-PowerControl) and is provided with one or more values of the ID(s) of pathloss reference RS(s), the UE may obtain mapping between a set of values for an SRI field in DCI format 0_1 and a set of ID value(s) of the pathloss reference RS(s) by higher layer signaling (for example, sri-PUSCH-PowerControl-Id in SRI-PUSCH-PowerControl). The UE may determine the RS resource index $q_d$, based on the ID of the pathloss reference RS mapped in the SRI field value in DCI format 0_1 for scheduling the PUSCH.

When the PUSCH transmission is scheduled by DCI format 0_0 and the UE is not provided with PUCCH spatial relation information for a PUCCH resource with the lowest index for the active UL BWP b in each carrier f and serving cell c, the UE may use the same RS resource index $q_d$ as that for PUCCH transmission in the PUCCH resource.

When the PUSCH transmission is scheduled by DCI format 0_0 and the UE is not provided with spatial setting of the PUCCH transmission, when the PUSCH transmission is scheduled by DCI format 0_1 not including an SRI field, or when a configuration of power control of a PUSCH by an SRI is not provided to the UE, the UE may use the RS resource index $q_d$ with the pathloss reference RS ID of zero.

When a configured grant configuration (for example, ConfiguredGrantConfig) includes a given parameter (for example, rrc-CofiguredUplinkGrant) for PUSCH transmission configured by the configured grant configuration, an RS resource index $q_d$ may be provided to the UE by a pathloss reference index (for example, pathlossReferenceIndex) in the given parameter.

When the configured grant configuration does not include the given parameter for the PUSCH transmission configured by the configured grant configuration, the UE may determine the RS resource index $q_d$, based on the value of the ID of the pathloss reference RS mapped in the SRI field in the DCI format for activating the PUSCH transmission. When the DCI format does not include an SRI field, the UE may determine the RS resource index $q_d$ with the pathloss reference RS ID of zero.

<Transmission Power Control for PUCCH>

In NR, a transmission power of a PUCCH is controlled based on a TPC command (also referred to as a value, an increase/decrease value, a correction value, an indication value, and the like) indicated by the value of a given field (also referred to as a TPC command field, a first field, and the like) in DCI.

For example, by using the index l of a power control adjustment state, a transmission power ($P_{PUCCH,b,f,c}$ $(i,q_u,q_d,l)$) of a PUCCH in a PUCCH transmission occasion (also referred to as a transmission period and the like) i for the active UL BWP b in the carrier f of the serving cell c may be expressed by equation (2) below.

[Math. 2]

$$P_{\text{PUCCH}b,f,c}(i,q_u,q_d,l) =$$

$$= \min \left\{ \begin{array}{l} P_{\text{CMAX},f,c}(i), \\ P_{\text{O\_PUCCH}b,f,c}(q_u) + 10\log_{10}(2^{\mu} \cdot M_{\text{RB},b,f,c}^{\text{PUCCH}}(i)) + PL_{b,f,c}(q_d) + \Delta_{\text{F\_PUCCH}}(F) + \Delta_{\text{TF},b,f,c}(i) + g_{b,f,c}(i,l) \end{array} \right\} [\text{dBm}]$$

$$(2)$$

The power control adjustment state may be referred to as a PUCCH power control adjustment state, a first or second state, and the like.

The PUCCH transmission occasion i is a given period in which a PUCCH is transmitted and may be constituted of one or more symbols, one or more slots, or the like, for example.

In equation (2), $P_{CMAX,f,c}(i)$ is, for example, a transmission power (also referred to as a maximum transmission power, a UE maximum output power, and the like) of a user terminal configured for the carrier f of the serving cell c in the transmission occasion i. $P_{O\_PUCCH,b,f,c}(q_u)$ is, for example, a parameter related to a target received power configured for the active UL BWP b in the carrier f of the serving cell c in the transmission occasion i (for example, also referred to as a parameter related to a transmission power offset, a transmission power offset P0, or a target received power parameter, and the like).

$M^{PUCCH}_{RB,b,f,c}(i)$ is, for example, the number of resource blocks (bandwidth) allocated to a PUCCH for the transmission occasion i in the active UL BWP b in the carrier f of the serving cell c with subcarrier spacing $\mu$. $PL_{b,f,c}(q_d)$ is, for example, pathloss calculated by the user terminal by using the index $q_d$ of a reference signal (pathloss reference RS, DL-RS for pathloss measurement, PUCCH-PathlossReferenceRS) for downlink BWP associated with the active UL BWP b in the carrier f of the serving cell c.

$\Delta_{F\_PUCCH}(F)$ is a higher layer parameter given for each PUCCH format. $\Delta_{TF,b,f,c}(i)$ is a transmission power adjustment component (offset) for the UL BWP b in the carrier f of the serving cell c.

$g_{b,f,c}(i,l)$ is a value based on the TPC command with the power control adjustment state index l of the active UL BWP in the carrier f of the serving cell c and the transmission occasion i (for example, a power control adjustment state, an accumulated TPC command value, a closed loop value, and a PUCCH power adjustment state).

If the UE is provided with information indicating use of two PUCCH power control adjustment states (twoPUCCH-PC-AdjustmentStates) and PUCCH spatial relation information (PUCCH-SpatialRelationInfo), l may be l = {0, 1}. If the UE is not provided with the information indicating use of two PUCCH power control adjustment states or spatial relation information for PUCCH, l may be l = 0.

If the UE obtains a TPC command value from DCI format 1_0 or 1_1 and the UE is provided with the PUCCH spatial relation information, the UE may obtain mapping between a PUCCH spatial relation information ID (pucch-SpatialRelationInfoId) value and a closed loop index (closedLoopIndex, power adjustment state index l), by an index provided by ID of P0 for PUCCH (p0-PUCCH-Id in p0-Set in PUCCH-PowerControl in PUCCH-Config). When the UE receives an activation command including the value of the PUCCH spatial relation information ID, the UE may determine the value of the closed loop index providing the value l, via the link to the corresponding ID of P0 for PUCCH.

If the UE is provided with a configuration of a $P_{O\_PUCCH,b,f,c}(q_u)$ value for the corresponding PUCCH power adjustment stat l for the active UL BWP b in the carrier f of the serving cell c by a higher layer, $g_{b,f,c}(i,l) = 0$ and k = 0, 1, ..., i hold. If the UE is provided with the PUCCH spatial relation information, the UE may determine the value l from a value $q_u$, based on the PUCCH spatial relation information associated with the ID of P0 for PUCCH corresponding to $q_u$ and the closed loop index value corresponding to l.

$q_u$ may be the ID of P0 for PUCCH (p0-PUCCH-Id) indicating P0 for PUCCH (P0-PUCCH) in a P0 set for PUCCH (p0-Set).

<Transmission Power Control for SRS>

For example, by using the index l of a power control adjustment state, transmission power ($P_{SRS,b,f,c}(i,q_s,l)$) of an SRS in a transmission occasion (also referred to as a transmission period and the like) i of a reference signal for measurement (Sounding Reference Signal (SRS)) for the active UL BWP b in the carrier f of the serving cell c may be expressed by equation (3) below.

The power control adjustment state may be referred to as an SRS power control adjustment state, a value based on a TPC command, an accumulated TPC command value, a closed loop value, a first or second state, and the like. l may be referred to as a closed loop index.

The SRS transmission occasion i is a given period in which an SRS is transmitted and may be constituted of one or more symbols, one or more slots, or the like, for example.

[Math. 3]

$$P_{\text{SRS},b,f,c}(i,q_s,l)$$

$$= \min \left\{ \begin{array}{l} P_{\text{CMAX},f,c}(i), \\ P_{\text{O\_SRS},b,f,c}(q_s) + 10\log_{10}(2^{\mu} \cdot M_{\text{SRS},b,f,c}(i)) + \alpha_{\text{SRS},b,f,c}(q_s) \cdot PL_{b,f,c}(q_d) + h_{b,f,c}(i,l) \end{array} \right\} \quad [\text{dBm}]$$

$$(3)$$

In equation (3), $P_{\text{CMAX},f,c}(i)$ is, for example, a UE maximum output power for the carrier f of the serving cell c in the SRS transmission occasion i. $P_{\text{O\_SRS},b,f,c}(q_s)$ is a parameter related to a target received power provided by p0 (also referred to as a parameter related to a transmission power offset, a transmission power offset P0, a target received power parameter, and the like, for example) for the active UL BWP b in the carrier f of the serving cell c and an SRS resource set $q_s$ (provided by SRS-ResourceSet and SRS-ResourceSetId).

$M_{\text{SRS},b,f,c}(i)$ is an SRS bandwidth represented by the number of resource blocks for the SRS transmission occasion i in the active UL BWP b in the carrier f of the serving cell c with subcarrier spacing $\mu$.

$\alpha_{\text{SRS},b,f,c}(q_s)$ is provided by $\alpha$ (for example, alpha) for the active UL BWP b in the carrier f of the serving cell c with the subcarrier spacing $\mu$ and the SRS resource set $q_s$.

$PL_{b,f,c}(q_d)$ denotes a DL pathloss estimation value [dB] calculated by the UE by using the RS resource index $q_d$ for the active DL BWP of the serving cell c and the SRS resource set $q_s$. The RS resource index $q_d$ is a pathloss reference RS associated with the SRS resource set $q_s$ (DL RS for pathloss measurement provided by pathlossReferenceRS, for example) and is an SS/PBCH block index (for example, ssb-Index) or a CSI-RS resource index (for example, csi-RS-Index).

$h_{b,f,c}(i,l)$ is an SRS power control adjustment state for the active UL BWP b in the carrier f of the serving cell c and the SRS transmission occasion i. When a configuration of the SRS power control adjustment state (for example, srs-PowerControlAdjustmentStates) indicates the same power control adjustment state for SRS transmission and PUSCH transmission, $h_{b,f,c}(i,l)$ is the same as the current PUSCH power control adjustment state $f_{b,f,c}(i,l)$.

The PUSCH, PUCCH, and SRS transmission occasions i may each be defined by a slot index $n_{s,f}^{\mu}$ in a frame with a system frame number SFN, the first symbol S in a slot, and the number L of consecutive symbols. In a case of PUSCH transmission of repetition type B, a PUSCH transmission occasion may be nominal repetition.

(Channel/RS to which Indicated TCI State is Applied)

An indicated TCI state indicated by a MAC CE/DCI may be applied to the following channels/RSs.

{PDCCH}

- When followUnifiedTCIState (following a unified-TCI state) is configured for CORESET 0, an indicated TCI state is applied.
  Otherwise, a Rel-15 specification is applied to the CORESET. In other words, CORESET 0 follows a TCI state activated by a MAC CE or QCLed with an SSB.
- To a CORESET having an index other than 0 with USS/CSS type 3, an indicated TCI state is always applied.
- When following a unified TCI state is configured for a CORESET having an index other than 0 with CSS at least other than CSS type 3, an indicated TCI state is always applied. Otherwise, a configured TCI state for the CORESET is applied to the CORESET.

{PDSCH}

- To all the UE-dedicated PDSCH, an indicated TCI state is always applied.
- When followUnifiedTCIState is configured for a non-UE-dedicated PDSCH (PDSCH scheduled by DCI in a CSS) (for the CORESET of the PDCCH scheduling the PDSCH), an indicated TCI state may be applied. Otherwise, a configured TCI state for the PDSCH is applied to the PDSCH. When followUnifiedTCIState is not configured for the PDSCH, whether the non-UE-dedicated PDSCH is to follow the indicated TCI state may be determined according to whether or not followUnifiedTCIState is configured for the CORESET used for scheduling the PDSCH.

{CSI-RS}

- When followUnifiedTCIState is configured for an A-CSI-RS for CSI acquisition or beam management (for the CORESET of a PDCCH triggering the A-CSI-RS), an indicated TCI state is applied. To the other CSI-RSs, a configured TCI state for the CSI-RS is applied.

{PUCCH}

- To all the dedicated PUCCH resources, an indicated TCI state is always applied.

{PUSCH}

- To a dynamic/configured grant PUSCH, an indicated TCI state is always applied.

{SRS}

- When following a unified TCI state is configured for an SRS resource set for an A-SRS with usage of beam management and an A/SP/P-SRS with usage of codebook (CB)/non-codebook (NCB)/antenna switching, an indicated TCI state is applied. To the other SRSs, a configured TCI state in the SRS resource set is applied.

(simultaneous multi-panel UL transmission (SiMPUL))

For improvement of UL throughput/reliability in future radio communication systems (for example, Rel. 18 or later versions), it is studied to support simultaneous UL transmission using multiple panels (for example, simultaneous multi-panel UL transmission (SiMPUL), simultaneous UL transmission from multiple panels (STxMP)) for one or more transmission/reception points (TRPs).

In the present disclosure, simultaneous UL transmission using multiple panels, STxMP, SiMPUL, and UL transmission in the same time domain using multi-panel may be interchangeably interpreted.

In the present disclosure, a panel, a reception panel, a UE panel, a UE capability value, a UE capability value set, a panel group, and the like may be interchangeably interpreted.

<Single-DCI Based Multi-TRP PUSCH(s)>

It is studied to transmit a single-DCI based multi-TRP STxMP PUSCH(s) in the following transmission schemes:

- SDM (space division multiplexing) scheme
- FDM (frequency division multiplexing)-B scheme
- FDM-A scheme
- SFN (single frequency network) based transmission scheme
- SDM repetition scheme

The SDM scheme may be a scheme in which different layers/DMRS ports of one PUSCH are precoded separately to transmit the resultant simultaneously from different UE panels.

The FDM-B scheme may be a scheme in which a plurality of (two) PUSCHs (transmission occasions) of the same/different redundancy versions (RVs) of the same transport block (TB) are transmitted from different UE panels in non-overlapping frequency domain resources and the same time domain resource.

The FDM-A scheme may be a scheme in which different parts of a frequency domain resource of one PUSCH (transmission occasion) are transmitted from different UE panels.

The SFN based transmission scheme may be a scheme in which all the same layers/DMRS ports of one PUSCH are transmitted simultaneously from a plurality of (two) different UE panels.

The SDM repetition scheme may be a scheme in which a plurality of (two) PUSCHs (transmission occasions) having different RVs of the same TB are transmitted simultaneously from a plurality of (two) different UE panels.

<Multi-DCI Based Multi-TRP PUSCHs>

For multi-DCI based multi-TRP STxMP PUSCH(s), a plurality of (two) PUSCHs may be associated with different TRPs. The plurality of different PUSCHs may be transmitted from respective different UE panels.

The total number of layers of N PUSCHs may be $2 \times N$.

The plurality of PUSCHs may be at least one of a PUSCH scheduled by DCI, a configured grant PUSCH, and a PUSCH for message 3/message A.

The plurality of PUSCHs may fully/partially overlap in the time domain and may fully/partially overlap in the frequency domain or may not overlap in the frequency domain.

<Single-DCI Based Multi-TRP PUCCH(s)>

It is studied to transmit a single-DCI based multi-TRP STxMP PUCCH(s) in the following transmission schemes:

- FDM-A scheme
- FDM-B scheme
- SFN based transmission scheme

The FDM-A scheme may be a scheme in which different frequency-domain parts of one PUCCH are transmitted from different UE panels.

The FDM-B scheme may be a scheme in which a plurality of (two) FDMed PUCCHs (transmission occasions) of the same UCI in the same PUCCH format are transmitted simultaneously from different UE panels.

The SFN based transmission scheme may be a scheme in which identical PUCCHs/DMRSs for PUCCH are transmitted simultaneously from different UE panels.

A specific PUCCH format to be supported is studied for each of the above schemes.

<Multi-DCI Based Multi-TRP PUCCHs>

For multi-DCI based multi-TRP STxMP PUCCHs, a plurality of (two) PUCCHs may be associated with different TRPs. The plurality of different PUCCHs may be transmitted from respective different UE panels.

The plurality of PUCCHs may fully/partially overlap in the time domain.

(Analysis)

For future radio communication systems (for example, Rel. 18 or later versions), power control of UL transmission in multi-TRP operation assuming a unified TCI state framework is studied.

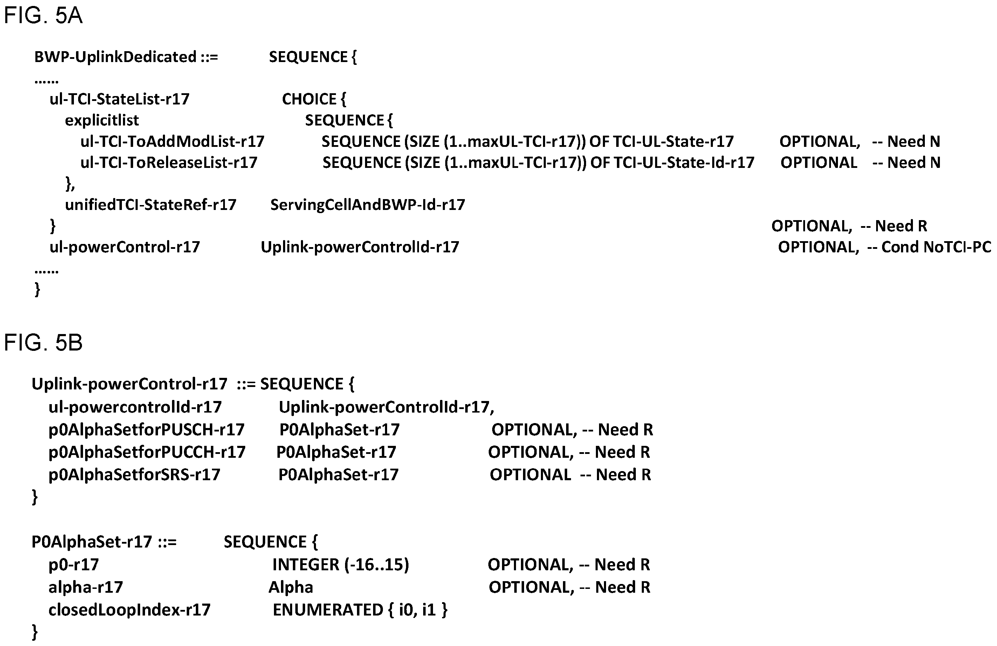

In a Rel-17 unified TCI state, a UL power control parameter (RRC information element "uplink-powerControl-r17") included in a configuration of a UE-specific UL BWP (RRC information element "BWP-UplinkDedicated") is provided to a UE (see FIG. 5A). When no UL TCI state/joint TCI state of a serving cell is configured for the UE, the parameter is used for transmission power control of UL transmission.

The UL power control parameter (RRC information element "uplink-powerControl-r17") includes a UL power control parameter ID (Uplink-powerControlId-r17) to identify the UL power control parameter by the ID.

The UL power control parameter (RRC information element "uplink-powerControl-r17") includes at least one of a set of P0 and $\alpha$ for PUSCH (p0AlphaSetforPUSCH-r17), a set of P0 and $\alpha$ for PUCCH (p0AlphaSetforPUCCH-r17), and a set of P0 and $\alpha$ for SRS (p0AlphaSetforSRS-r17), to be used for transmission power control of each channel/signal (see FIG. 5B).

In Rel-18 or later versions, a unified TCI state framework is enhanced for multi-TRP operation.

It is studied to use a setting of a power control parameter when no UL TCI state/joint TCI state is configured (which may be referred to as a setting of a default power control parameter, for example), for multi-TRP operation using a unified TCI state.

However, sufficient study is not performed about, for a case where a plurality of default power control parameter configurations (settings) are configured, an association/mapping of the plurality of configurations, a plurality of TRPs, and a plurality of (UE) panels. In particular, UL transmissions described below are not studied sufficiently:

- single-DCI multi-TRP PUSCH repetition (defined in Rel. 17)
- single-DCI multi-TRP PUCCH repetition (defined in Rel. 17)
- single-DCI STxMP PUSCHs (defined in Rel. 18)
- single-DCI STxMP PUCCHs (defined in Rel. 18)
- multi-DCI STxMP PUSCHs (defined in Rel. 18)
- multi-DCI STxMP PUCCHs (defined in Rel. 18)
- SRSs in multi-TRP/STxMP PUSCHs

Unless this study is sufficient, degradation in communication quality, throughput reduction, and the like may occur.

Thus, the inventors of the present invention came up with the idea of a method of appropriately performing power control of UL transmission also in operation related to a unified TCI state or operation in STxMP UL transmission.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may mean "at least one of A, B, and C."

In the present disclosure, "notify," "activate," "deactivate," "indicate," "select," "configure," "update," "determine," and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, a field, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, the physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a reception panel, a UE panel, a UE capability value, a UE capability value set, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, an indicated TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

A panel Identifier (ID) and a panel may be interchangeably interpreted. In other words, a TRP ID and a TRP, a CORESET group ID and a CORESET group, and the like may be interchangeably interpreted.

In the present disclosure, a TRP, a transmission point, a panel, a DMRS port group, a CORESET pool, and one of two TCI states associated with one codepoint of a TCI field may be interchangeably interpreted.

In the present disclosure, transmission/reception of a channel/signal using a single TRP may be interpreted as TCI states (joint/separate/indicated TCI states) being equal in the transmission/repetition of the channel/signal (for example, NCJT/CJT/repetition) or the number of TCI states (joint/separate/indicated TCI states) is one in the transmission/reception of the channel/signal (for example, NCJT/CJT/repetition).

Transmission/reception of a channel/signal using a single TRP may be interpreted as TCI states (joint/separate/indicated TCI states) being different in the transmission repetition of the channel/signal (for example, NCJT/CJT/repetition) or the number of different TCI states (joint/separate/indicated TCI states) is more than one (for example, two) in the transmission/reception of the channel/signal (for example, NCJT/CJT/repetition).

In the present disclosure, a single (one) TRP, a single-TRP system, single-TRP transmission, and a single PDSCH may be interchangeably interpreted. In the present disclosure, multi-TRP (multiple TRPs), a multi-TRP system, multi-TRP transmission, and multi-PDSCH may be interchangeably interpreted.

In the present disclosure, single-DCI, a single PDCCH, single-DCI based multi-TRP, two TCI states on at least one TCI codepoint being activated, at least one codepoint of a TCI field being mapped to two TCI states, a specific index (for example, a TRP index, a CORESET pool index, or an index corresponding to a TRP) being configured for a specific channel/CORESET may be interchangeably interpreted.

In the present disclosure, a single TRP, a channel/signal using a single TRP, a channel using one TCI state/spatial relation, multi-TRP being not enabled by RRC/DCI, a plurality of TCI states/spatial relations being not enabled by RRC/DCI, and one CORESET pool index (CORESETPoolIndex) value being not configured for any CORESET and any codepoint of a TCI field being not mapped to two TCI states may be interchangeably interpreted.

In the present disclosure, multi-TRP, a channel/signal using multi-TRP, a channel using a plurality of TCI states/spatial relations, multi-TRP being enabled by RRC/DCI, a plurality of TCI states/spatial relations being enabled by RRC/DCI, and at least one of single-DCI based multi-TRP and multi-DCI based multi-TRP may be interchangeably interpreted.

In the present disclosure, multi-DCI based multi-TRP, one CORESET pool index (CORESETPoolIndex) value being configured for a CORESET, and a plurality of specific indices (for example, TRP indices, and CORESET pool indices, or indices corresponding to TRPs) being configured for specific channels/CORESETs may be interchangeably interpreted.

In the present disclosure, TRP #1 (first TRP) may correspond to CORESET pool index = 0 or correspond to a first TCI state of two TCI states corresponding to one codepoint of a TCI field. TRP #2 (second TRP) TRP #1 (first TRP) may correspond to CORESET pool index = 1 or correspond to a second TCI state of the two TCI states corresponding to the one codepoint of the TCI field.

In the present disclosure, single DCI (sDCI), a single PDCCH, a multi-TRP system based on single DCI, sDCI-based MTRP, and two TCI states in at least one TCI codepoint being activated may be interchangeably interpreted.

In the present disclosure, multi-DCI (mDCI), multi-PDCCH, a multi-TRP system based on multi-DCI, mDCI-based MTRP, and two CORESET pool indices or CORESET pool index = 1 (or a value equal to one or greater) being configured may be interchangeably interpreted.

In the present disclosure, beam indication DCI, a beam indication MAC CE, and beam indication DCI/MAC CE may be interchangeably interpreted. In other words, indication related to an indication TCI state for a UE may be performed by using at least one of DCI and a MAC CE.

In the present disclosure, repetition, repetition transmission, and repetition reception may be interchangeably interpreted.

In the present disclosure, a channel, a signal, and a channel/signal may be interchangeably interpreted. In the present disclosure, a DL channel, a DL signal, a DL signal/channel, transmission/reception of a DL signal/channel, DL reception, and DL transmission may be interchangeably interpreted. In the present disclosure, a UL channel, a UL signal, a UL signal/channel, transmission/reception of a UL signal/channel, UL reception, and UL transmission may be interchangeably interpreted.

In the present disclosure, application of a TCI state/QCL assumption to each channel/signal/resource may mean application of a TCI state/QCL assumption to transmission/reception of each channel/signal/resource.

In the present disclosure, a first TCI state may correspond to a first TRP. In the present disclosure, a second TCI state may correspond to a second TRP. In the present disclosure, an n-th TCI state may correspond to an n-th TRP.

In the present disclosure, a value (for example, 0) of a first CORESET pool index, a value (for example, 1) of a first TRP index, and a first TCI state (first DL/UL (joint/separate) TCI state) may correspond to each other. In the present disclosure, a value (for example, 1) of a second CORESET pool index, a value (for example, 2) of a second TRP index, and a second TCI state (second DL/UL (joint/separate) TCI state) may correspond to each other.

Note that, in each embodiment of the present disclosure below, a method targeting two TRPs for application of a plurality of TCI states in transmission/reception using multiple TRPs (i.e., a case where at least one of N and M is 2) will be mainly described. However, the number of TRPs may be three or more (multiple), and each embodiment may be applied so as to correspond to the number of TRPs. In other words, at least one of N and M may be a number larger than two.

In the present disclosure, reception of a DL signal (PDSCH/PDCCH) using an SFN may mean reception by using the same time/frequency resource and/or of the same data (PDSCH)/control information (PDCCH) from a plurality of transmission/reception points. Reception of a DL signal using an SFN may mean reception by using the same time/frequency resource and/or of the same data/control information by using a plurality of TCI states/spatial domain filters/beams/QCLs.

In the present disclosure, a default power control setting, a default power control parameter, a power control parameter used when no UL TCI state/joint TCI state is configured, a power control setting used when a UL TCI state/joint TCI state is configured, a UL transmission power configuration, a UL transmission power parameter, a power control setting, a power control parameter, and the like may be interchangeably interpreted.

(Radio Communication Method)

A UE may control transmission power of UL transmission, based on a plurality of power control settings (PC settings).

The two power control settings may be a first UL power control parameter (power control setting) and a second UL power control parameter (power control setting), for example.

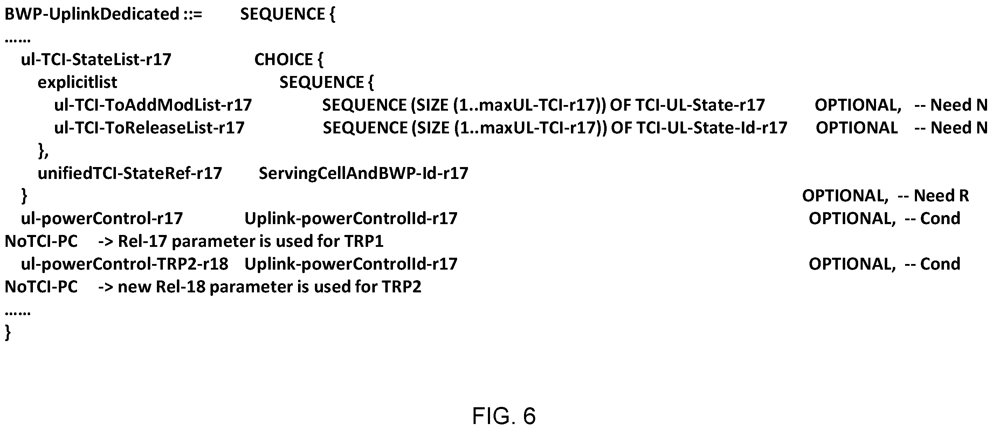

For example, as shown in FIG. 6, a first UL power control parameter (for example, uplink-powerControl-r17) and a second UL power control parameter (for example, uplink-powerControl-TRP2-r18) may be included in a UE-specific UL BWP configuration (for example, BWP-UplinkDedicated) (structure A). These parameters may both indicate UL power control parameter IDs (Uplink-powerControlId-r17).

In structure A, in multi-TRP operation, a first UL power control parameter (for example, uplink-powerControl-r17) may be used for transmission power control for a first TRP. A second UL power control parameter (for example, uplink-powerControl-TRP2-r18) may be used for transmission power control for a second TRP.

In structure A, in single-TRP operation, the first UL power control parameter (for example, uplink-powerControl-r17) may be used.

Note that, in structure A, the first power control setting may refer to a power control setting provided by a parameter defined in Rel. 17. Moreover, in structure A, the second power control setting may refer to a power control setting provided by a parameter defined in Rel. 18.

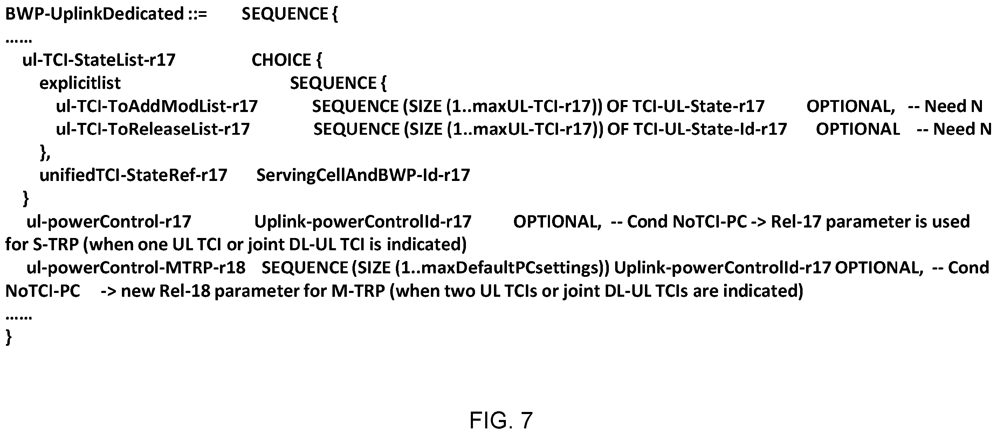

For example, as shown in FIG. 7, uplink-powerControl-r17 and a first/second UL power control parameter (for example, uplink-powerControl-MTRP-r18) may be included in a UE-specific UL BWP configuration (for example, BWP-UplinkDedicated) (structure B).

uplink-powerControl-r17 above may indicate a UL power control parameter ID (for example, Uplink-power-ControlId-r17).

The first/second UL power control parameter (for example, uplink-powerControl-MTRP-r18) may have a size of a specific number (for example, defined by a default power control setting parameter at maximum (for example, maxDefaultPCsettings)).

The first/second UL power control parameter (for example, uplink-powerControl-MTRP-r18) may indicate a plurality of (for example, two) UL power control parameter IDs (for example, Uplink-powerControlId-r17). The first/second UL power control parameter (for example, uplink-powerControl-MTRP-r18) may be a list including a plurality of (for example, two) UL power control parameter IDs (for example, Uplink-powerControlId-r17).

In structure B, in single-TRP operation, uplink-powerControl-r17 may be used. In multi-TRP operation, the first/second UL power control parameter (for example, uplink-powerControl-MTRP-r18) may be used for transmission power control for first/second TRP.

Note that maxDefaultPCsettings may be related to the number of panels/TRPs. For example, in a case of two default power control settings for transmission using two panels/TRPs, maxDefaultPCsettings may indicate 2.

Note that, in structure B, the UE may refer to a list provided by the first/second power control setting for the first/second power control setting.

The UE may refer to a lower (or higher) UL power control parameter ID (for example, Uplink-powerControlId) for the first UL power control parameter.

The UE may refer to a higher (or lower) UL power control parameter ID (for example, Uplink-powerControlId) for the second UL power control parameter.

The first/second UL power control parameter may include at least one of a set of P0 and $\alpha$ for PUSCH (for example, p0AlphaSetforPUSCH-r17), a set of P0 and $\alpha$ for PUCCH (for example, p0AlphaSetforPUCCH-r17), and a set of P0 and $\alpha$ for SRS (for example, p0AlphaSetforSRS-r17).

The UE may control a transmission power of a PUSCH corresponding to each TRP, based on a set of P0 and $\alpha$ for PUSCH (for example, p0AlphaSetforPUSCH-r17) corresponding to a UL power control parameter ID included in the first/second UL power control parameter.

The UE may control a transmission power of a PUCCH corresponding to each TRP, based on a set of P0 and $\alpha$ for PUCCH (for example, p0AlphaSetforPUCCH-r17) corresponding to a UL power control parameter ID included in the first/second UL power control parameter.

The UE may control a transmission power of an SRS corresponding to each TRP, based on a set of P0 and $\alpha$ for SRS (for example, p0AlphaSetforSRS-r17) corresponding to a UL power control parameter ID included in the first/second UL power control parameter.

Note that, in each embodiment of the present disclosure below, a multi-TRP PUSCH/PUCCH and a single-TRP PUSCH/PUCCH may be dynamically switched (for example, by using (a specific field) of DCI).

In each embodiment of the present disclosure below, an STxMP PUSCH/PUCCH and a single-panel PUSCH/-PUCCH may be dynamically switched (for example, by using (a specific field) of DCI).

The specific field may be an SRS resource set indicator field included in DCI that schedules a PUSCH or may be a new field defined in Rel. 18 or later versions, for example.

The UE may determine a correspondence/mapping between the first/second UL power control parameter and the first/second TRP, based on specific information/condition/method. The specific information/condition/method will be described in detail in first to seventh embodiments below.

<First Embodiment>

In the present embodiment, UL transmission using multi-TRP will be described.

In the present disclosure, UL transmission using multi-TRP may be at least one of UL channels/signals described below:

- single-DCI multi-TRP PUSCH repetition (defined in Rel. 17)
- single-DCI multi-TRP PUCCH repetition (defined in Rel. 17)
- single-DCI STxMP PUSCHs (defined in Rel. 18)
- single-DCI STxMP PUCCHs (defined in Rel. 18)
- multi-DCI STxMP PUSCHs (defined in Rel. 18)
- multi-DCI STxMP PUCCHs (defined in Rel. 18)
- SRSs in multi-TRP/STxMP PUSCHs

A first power control setting may correspond to a first TCI state. A second power control setting may correspond to a second TCI state. An n-th power control setting may correspond to an n-th TCI state.

In multi-TRP/STxMP UL transmission, correspondences/mapping between a plurality of (for example, two) power control settings and UL transmission (for example, a PUSCH/PUCCH/SRS) may be the same as correspondences/mapping between a plurality of (for example, two) TCI states and UL transmission (for example, a PUSCH/-PUCCH/SRS).

The correspondence/mapping between a plurality of (for example, two) TCI states and UL transmission (for example, a PUSCH/PUCCH/SRS) may be determined/configured based on a specific method/condition. The specific method/condition may be a method/condition defined in Rel. 18, for example.

In single-TRP/single-panel UL transmission, when the first/second TCI state is used for the UL transmission (for example, a PUSCH/PUCCH/SRS), the UE may use the first/second power control setting for the UL transmission.

The plurality of (for example, two) TCI states may be a plurality of (for example, two) indicated TCI states (UL TCI states/joint (DL-UL) TCI states).

The plurality of (first/second) TCI states may be TCI states activated by a MAC CE and mapped to a DCI codepoint(s) (TCI field codepoint(s)).

The plurality of (first/second) TCI states may be TCI states corresponding to specific TCI state IDs. For example, the first TCI state may be a TCI state corresponding to a lower (or higher) TCI state ID. For example, the second TCI state may be a TCI state corresponding to a higher (lower) TCI state ID.

When the UE is indicated with two TCI fields, the first/second TCI state may be a TCI state indicated by a first/second TCI state.

For multi-DCI based multi-TRP/STxMP, the first TCI state may be a TCI state associated with a lower (or higher) CORESET pool index. For multi-DCI based multi-TRP/STxMP, the second TCI state may be a TCI state associated with a higher (or lower) CORESET pool index.

According to the first embodiment above, it is possible to appropriately associate UL transmission and TCI states.

<Second Embodiment>

This embodiment relates to PUSCH.

The PUSCH of this embodiment may be PUSCHs (repetition) using multi-TRP, for example.

This embodiment is broadly categorized into options 2-0 to 2-3 below. A UE/base station may follow at least one of options 2-0 to 2-3 below.

<<Option 2-0>>

A plurality of (two) power control settings need not be applied to PUSCHs (repetition) using multi-TRP.

The UE need not apply a plurality of (two) power control settings to PUSCHs (repetition) using multi-TRP.

In the present disclosure, whether or not to apply a plurality of (two) power control settings to PUSCHs (repetition) using multi-TRP may be determined/configured for each CC/cell/BWP/band.

<<Option 2-1>>

A first power control setting may correspond to a first (codebook (CB)/non-codebook (NCB)) SRS resource set.

A second power control setting may correspond to a second (CB/NCB) SRS resource set.

The first (CB/NCB) SRS resource set may be an SRS resource set corresponding to a lower (or higher) SRS resource set ID.

The second (CB/NCB) SRS resource set may be an SRS resource set corresponding to a higher (or lower) SRS resource set ID.

The UE may determine, for multi-TRP PUSCHs, that a correspondence/mapping between the first/second power control setting and a PUSCH (repetition) is the same as a correspondence/mapping between a first/second SRS resource set and a PUSCH (repetition).

In a case of a single-TRP PUSCH, when the first/second SRS resource set is used for the PUSCH, the UE may determine to use the first/second power control setting for the PUSCH.

The correspondence/mapping between the first/second SRS resource set and a PUSCH (repetition) may be the same as the correspondence/mapping defined in Rel. 17.

<<Option 2-2>>

A first power control setting may correspond to a first SRI field.

A second power control setting may correspond to a second SRI field.

The UE may determine, for multi-TRP PUSCHs, that a correspondence/mapping between the first/second power control setting and a PUSCH (repetition) may be the same as a correspondence/mapping between a first/second SRI field and a PUSCH (repetition).

In a case of a single-TRP PUSCH, when the first/second SRI field is used for the PUSCH, the UE may determine to use the first/second power control setting for the PUSCH.

The correspondence/mapping between the first/second SRI field and a PUSCH (repetition) may be the same as the correspondence/mapping defined in Rel. 17.

<<Option 2-3>>

A correspondence/mapping between a first/second power setting and a PUSCH (repetition) may be defined.

For example, in a case of a single-TRP using a first TRP (for example, a case where an SRS resource set indicator field indicates a first value (for example, "00")), the UE may apply first power control to a plurality of (for example, all) PUSCHs (repetition).

For example, in a case of a single-TRP using a second TRP (for example, a case where an SRS resource set indicator field indicates a second value (for example, "01")), the UE may apply second power control to a plurality of (for example, all) PUSCHs (repetition).

For example, in a case of multi-TRP of the first TRP and the second TRP in this order (for example, a case where an SRS resource set indicator field indicates a third value (for example, "10")) and a case where the number of repetitions is a specific number (for example, two), the UE may apply the first power control setting to a first repetition and apply the second power control setting to a second repetition.

For example, in a case of multi-TRP of the first TRP and the second TRP in this order (for example, a case where an SRS resource set indicator field indicates a third value (for example, "10")), a case where the number of repetitions is larger than a specific number (for example, two), and a case where cyclic mapping (for example, cyclicMapping) is enabled, the UE may apply the first power control setting to the first repetition and apply the second power control setting to the second repetition. The UE may apply the same mapping pattern to a remaining repetition(s).

For example, in a case of multi-TRP of the first TRP and the second TRP in this order (for example, a case where an SRS resource set indicator field indicates a third value (for example, "10")), a case where the number of repetitions is larger than a specific number (for example, two), and a case where sequential mapping (for example, sequentialMapping) is enabled, the UE may apply the first power control setting to a plurality of (for example, first and second) repetitions and apply the second power control setting to a plurality of other (for example, third and fourth) repetitions. The UE may apply the same mapping pattern to a remaining repetition(s).

For example, in a case of multi-TRP of the second TRP and the first TRP in this order (for example, a case where an SRS resource set indicator field indicates a fourth value (for example, "11")) and a case where the number of repetitions is a specific number (for example, two), the UE may apply the second power control setting to a first repetition and apply the first power control setting to a second repetition.

For example, in a case of multi-TRP of the second TRP and the first TRP in this order (for example, a case where an SRS resource set indicator field indicates the fourth value (for example, "11")), a case where the number of repetitions is larger than a specific number (for example, two), and a case where cyclic mapping (for example, cyclicMapping) is enabled, the UE may apply the second power control setting to the first repetition and apply the first power control setting to the second repetition. The UE may apply the same mapping pattern to a remaining repetition(s).

For example, in a case of multi-TRP of the second TRP and the first TRP in this order (for example, a case where an SRS resource set indicator field indicates the fourth value (for example, "11")), a case where the number of repetitions is larger than a specific number (for example, two), and a case where sequential mapping (for example, sequentialMapping) is enabled, the UE may apply the second power control setting to a plurality of (for example, first and second) repetitions and apply the first power control setting to a plurality of other (for example, third and fourth) repetitions. The UE may apply the same mapping pattern to a remaining repetition(s).

Note that only an application method for a case where the SRS resource set indicator field indicates the first value (for example, "00")/second value (for example, "01") above may be supported/defined or may be configured for the UE by higher layer signaling (RRC/MAC CE).

Note that only an application method for a case where the SRS resource set indicator field indicates the third value (for example "10")/fourth value (for example, "11") above may be supported/defined or may be configured for the UE by higher layer signaling (RRC/MAC CE).

Note that the SRS resource set indicator field above is merely an example and may be interpreted as any (specific) field included in DCI. The specific field may be a field indicating switching of single-TRP and multi-TRP (defined in Rel. 18 or later versions), for example. The values of a codepoint above are also merely examples and may be replaced with other values.

According to the second embodiment above, it is possible to appropriately control transmission power of multi-TRP PUSCHs.

<Third Embodiment>

This embodiment relates to PUCCH.

The PUCCH of this embodiment may be PUSCHs (repetition) using multi-TRP, for example.

This embodiment is broadly categorized into options 3-0 and 3-1 below. A UE/base station may follow at least one of option 3-0 or option 3-1 below.

<<Option 3-0>>

A plurality of (two) power control settings need not be applied to PUCCHs (repetition) using multi-TRP.

The UE need not apply a plurality of (two) power control settings to PUCCHs (repetition) using multi-TRP.

In the present disclosure, whether or not to apply a plurality of (two) power control settings to PUCCHs (repetition) using multi-TRP may be determined/configured for each CC/cell/BWP/band/PUCCH resource.

<<Option 3-1>>

A correspondence/mapping between a first/second power setting and a PUCCH (repetition) may be defined.

For example, in a case of multi-TRP and a case where the number of repetitions is a specific number (for example, two), the UE may apply the first power control setting to a first repetition and apply the second power control setting to a second repetition.

For example, in a case of multi-TRP, a case where the number of repetitions is larger than a specific number (for example, two), and a case where cyclic mapping (for example, cyclicMapping) is enabled, the UE may apply the first power control setting to the first repetition and apply the second power control setting to the second repetition. The UE may apply the same mapping pattern to a remaining repetition(s).

For example, in a case of multi-TRP, a case where the number of repetitions is larger than a specific number (for example, two), and a case where sequential mapping (for example, sequentialMapping) is enabled, the UE may apply the first power control setting to a plurality of (for example, first and second) repetitions and apply the second power control setting to a plurality of other (for example, third and fourth) repetitions. The UE may apply the same mapping pattern to a remaining repetition(s).

In a case of multi-TRP, the mapping methods described in option 2-3 above may be applied to PUCCHs. For example, the mapping method corresponding to the order of the first TRP and the second TRP and the mapping method corresponding to the order of the second TRP and the first TRP may be configured for/indicated to the UE. The configuration may be performed by using higher layer signaling (RRC/MAC CE), or the indication may be performed by using DCI.

For example, in a case of a single-TRP, which one of the first power control setting and the second power control setting is to be applied to a PUCCH may be defined in advance. For example, it may be defined that the first (or second) power control setting is to be applied to a PUCCH.

For example, in a case of a single-TRP, which one of the first power control setting and the second power control setting is to be applied to a PUCCH may be configured for/indicated to the UE by a network (base station). For example, it may be configured for/indicated to the UE that the first (or second) power control setting is to be applied to a PUCCH.

The configuration may be (semi-statically) performed by using higher layer signaling (RRC/MAC CE), or the indication may be (dynamically) performed by using DCI. The configuration may be configuration for each CC/cell/BWP/-band/PUCCH resource, for example.

According to the third embodiment above, it is possible to appropriately control transmission power of multi-TRP PUCCHs.

<Fourth Embodiment>

This embodiment relates to PUSCH.

The PUSCH of this embodiment may be STxMP PUSCHs (based on single DCI), for example.

This embodiment is broadly categorized into options 4-0 to 4-7 below. A UE/base station may follow at least one of options 4-0 to 4-7 below.

<<Option 4-0>>

A plurality of (two) power control settings need not be applied to STxMP PUSCHs (based on single DCI).

A UE need not apply a plurality of (two) power control settings to STxMP PUSCHs (based on single DCI).

In the present disclosure, whether or not to apply a plurality of (two) power control settings to STxMP PUSCHs (based on single DCI) may be determined/configured for each CC/cell/BWP/band.

<<Option 4-1>>

A first power control setting may correspond to a first (codebook (CB)/non-codebook (NCB)) SRS resource set.

A second power control setting may correspond to a second (codebook (CB)/non-codebook (NCB)) SRS resource set.

The first (codebook (CB)/non-codebook (NCB)) SRS resource set may be an SRS resource set corresponding to a lower (or higher) SRS resource set ID.

The second (codebook (CB)/non-codebook (NCB)) SRS resource set may be an SRS resource set corresponding to a lower (or higher) SRS resource set ID.

<<Option 4-2>>

A first power control setting may correspond to a first SRI field.

A second power control setting may correspond to a second SRI field.

<<Option 4-3>>

A first power control setting may correspond to a first panel.

A second power control setting may correspond to a second panel.

The first panel may be a panel corresponding to a lower (or higher) ID related to panel.

The second panel may be a panel corresponding to a higher (lower) ID related to panel.

<<Option 4-4>>

The UE may transmit a plurality of (two) codewords (CWs) by using a plurality of (two) panels on one PUSCH.

In this case, a first power control setting may correspond to a first CW. A second power control setting may correspond to a second CW.

<<Option 4-5>>

The UE may transmit DMRSs of different DMRS CDM groups by using a plurality of (two) panels.

In this case, a first power control setting may correspond to a first DMRS CDM group. A second power control setting may correspond to a second DMRS CDM group.

The first DMRS CDM group may be a CDM group corresponding to a lower (or higher) ID.

The second DMRS CDM group may be a CDM group corresponding to a higher (lower) ID.

The first DMRS CDM group may mean a CDM group of a first DMRS(s) indicated in an antenna port field in DCI. The second DMRS CDM group may mean a CDM group other than the CDM group of the first DMRS(s).

<<Option 4-6>>

The UE may transmit different layers of one PUSCH by using a plurality of (two) panels.

In this case, a first power control setting may correspond to a first set of layers. A second power control setting may correspond to a second set of layers.

The first set of layers may mean first K layer(s). The second set of layers may mean a layer(s) other than the first K layers.

K may be defined in a specification in advance or may be configured for/indicated to the UE by a network. For example, K may be determined based on rank indication of the plurality of (two) panels.

<<Option 4-7>>

The UE may transmit one PUSCH by using a plurality of different frequency-domain resources by using a plurality of (two) panels.

The UE may transmit a plurality of (two) PUSCH repetitions by using a plurality of different (sets of) frequency-domain resources.

In this case, a first power control setting may correspond to a first frequency-domain resource (set of frequency-domain resources). A second power control setting may correspond to a second frequency-domain resource (set of frequency-domain resources).

The first frequency-domain resource (set of frequency-domain resources) may be a frequency-domain resource (set of frequency-domain resources) having a lower (or higher) start resource block index.

The second frequency-domain resource (set of frequency-domain resources) may be a frequency-domain resource (set of frequency-domain resources) having a higher (or lower) start resource block index.

In at least one of options 4-1 to 4-3 above, in a case of STxMP PUSCHs, the UE may determine that a correspondence/mapping between the first/second power control setting and a PUSCH may be the same as a correspondence/mapping between a first/second SRS resource set and a PUSCH.

In at least one of options 4-1 to 4-3 above, in a case of STxMP PUSCHs, the UE may determine that a correspondence/mapping between the first/second power control setting and a PUSCH may be the same as a correspondence/mapping between a first/second SRI field and a PUSCH.

In at least one of options 4-1 to 4-3, in a case of STxMP PUSCHs, the UE may determine that a correspondence/mapping between the first/second power control setting and a PUSCH may be the same as a correspondence/mapping between a first/second panel and a PUSCH.

In at least one of options 4-1 to 4-3 above, in a case of a single-TRP PUSCH and a case where at least one of a first/second SRS resource set, a first/second SRI field, and a first/second panel is used for the PUSCH, the UE may determine to use the first/second power control setting for the PUSCH.

For at least one of the options 4-4 to 4-7 above, in a case of STxMP PUSCHs, at least one of the options 4-4 to 4-7 above may be applied.

For at least one of options 4-4 to 4-7, in a case of a single-panel PUSCH, which one of the first power control setting and the second power control setting is to be applied to a PUSCH may be defined in advance. For example, it may be defined that the first (or second) power control setting is to be applied to a PUSCH.

For at least one of options 4-4 to 4-7 above, in a case of a single-panel PUSCH, which one of the first power control setting and the second power control setting is to be applied to a PUSCH may be configured for/indicated to the UE by a network (base station). For example, it may be configured for/indicated to the UE that the first (or second) power control setting is to be applied to a PUSCH.

The configuration may be (semi-statically) performed by using higher layer signaling (RRC/MAC CE), or the indication may be (dynamically) performed by using DCI. The configuration may be configuration for each CC/cell/BWP/-band, for example.

According to the fourth embodiment above, it is possible to appropriately control transmission power of STxMP PUSCHs.

<Fifth Embodiment>

This embodiment relates to PUCCH.

The PUCCH of this embodiment may be STxMP PUCCHs (based on single DCI), for example.

This embodiment is broadly categorized into options 5-0 to 5-3 below. A UE/base station may follow at least one of options 5-0 to 5-3 below.

<<Option 5-0>>

A plurality of (two) power control settings need not be applied to STxMP PUCCHs (based on single DCI).

A UE need not apply a plurality of (two) power control settings to STxMP PUCCHs (based on single DCI).

In the present disclosure, whether or not to apply a plurality of (two) power control settings to STxMP PUCCHs (based on single DCI) may be determined/configured for each CC/cell/BWP/band/PUCCH resource.

<<Option 5-1>>

A first power control setting may correspond to a first panel.

A second power control setting may correspond to a second panel.

The first panel may be a panel corresponding to a lower (or higher) ID related to panel.

The second panel may be a panel corresponding to a higher (lower) ID related to panel.

For STxMP PUCCHs, the UE may determine that a correspondence/mapping between the first/second power control setting and a PUCCH may be the same as a correspondence/mapping between a first/second panel and a PUCCH.

In a case of a single-panel PUCCH, when the first/second panel is used for the PUCCH, the UE may determine to use the first/second power control setting for the PUCCH.

<<Option 5-2>>

The UE may transmit one PUCCH by using a plurality of different frequency-domain resources by using a plurality of (two) panels.

The UE may transmit a plurality of (two) PUCCH repetitions by using a plurality of different (sets of) frequency-domain resources.

In this case, a first power control setting may correspond to a first frequency-domain resource (set of frequency-domain resources). A second power control setting may correspond to a second frequency-domain resource (set of frequency-domain resources).

The first frequency-domain resource (set of frequency-domain resources) may be a frequency-domain resource (set of frequency-domain resources) having a lower (or higher) start resource block index.

The second frequency-domain resource (set of frequency-domain resources) may be a frequency-domain resource (set of frequency-domain resources) having a higher (or lower) start resource block index.

<<Option 5-3>>

For the UE, a plurality of (two) PUCCH resources may be indicated.

In this case, a first power control setting may correspond to a first PUCCH resource. A second power control setting may correspond to a second PUCCH resource.

The first PUCCH resource may be a PUCCH resource of a lower (or higher) PUCCH resource ID.

The second PUCCH resource may be a PUCCH resource of a higher (or lower) PUCCH resource ID.

For at least one of option 5-2 and option 5-3 above, in a case of an STxMP PUCCHs, at least one of option 5-2 and option 5-3 above may be applied.

For at least one of option 5-2 and option 5-3 above, in a case of a single-panel PUCCH, which one of the first power control setting and the second power control setting is to be applied to a PUCCH may be defined in advance. For example, it may be defined that the first (or second) power control setting is to be applied to a PUCCH.

For at least one of option 5-2 and option 5-3 above, in a case of a single-panel PUCCH, which one of the first power control setting and the second power control setting is to be applied to a PUCCH may be configured for/indicated to the UE by a network (base station). For example, it may be configured for/indicated to the UE that the first (or second) power control setting is to be applied to a PUCCH.

The configuration may be (semi-statically) performed by using higher layer signaling (RRC/MAC CE), or the indication may be (dynamically) performed by using DCI. The configuration may be configuration for each CC/cell/BWP/-band/PUCCH resource, for example.

According to the fifth embodiment above, it is possible to appropriately control transmission power of STxMP PUCCHs.

<Sixth Embodiment>

This embodiment relates to PUSCH and PUCCH.

The PUSCH of this embodiment may be STxMP PUSCHs (based on multi-DCI), for example.

The PUCCH of this embodiment may be STxMP PUCCHs (based on multi-DCI), for example.

This embodiment is broadly categorized into options 6-0 to 6-2 below. A UE/base station may follow at least one of options 6-0 to 6-2 below.

<<Option 6-0>>

For STxMP PUSCHs/PUCCHs (based on multi-DCI), a plurality of (two) power control settings need not be applied.

A UE need not apply a plurality of (two) power control settings to STxMP PUSCHs/PUCCHs (based on multi-DCI).

In the present disclosure, whether or not to apply a plurality of (two) power control settings to STxMP PUSCHs (based on multi-DCI) may be determined/configured for each CC/cell/BWP/band.

In the present disclosure, whether or not to apply a plurality of (two) power control settings to STxMP PUCCHs (based on multi-DCI) may be determined/configured for each CC/cell/BWP/band/PUCCH resource.

<<Option 6-1>>

A first power control setting may correspond to a first panel.

A second power control setting may correspond to a second panel.

The first panel may be a panel corresponding to a lower (or higher) ID related to panel.

The second panel may be a panel corresponding to a higher (lower) ID related to panel.

In a case of using the first/second panel for a PUSCH/PUCCH, the UE may determine to use the first/second power control setting for the PUSCH/PUCCH.

<<Option 6-2>>

A first power control setting may correspond to a first CORESET pool index.

A second power control setting may correspond to a second CORESET pool index.

The first CORESET pool index may be a CORESET pool index of a smaller (or larger) value

The second CORESET pool index may be a CORESET pool index of a larger (or smaller) value

For example, when the first CORESET pool index (for example, the CORESET pool index of a first value (for example, 0)) is associated with a PUSCH/PUCCH, the UE may determine that the first power control setting is used for the PUSCH/PUCCH.

For example, when the second CORESET pool index (for example, the CORESET pool index of a second value (for example, 1)) is associated with a PUSCH/PUCCH, the UE may determine that the second power control setting is used for the PUSCH/PUCCH.

According to the sixth embodiment above, it is possible to appropriately control transmission power of STxMP PUSCHs/PUCCHs.

<Seventh Embodiment>

This embodiment relates to SRS.

The SRS of this embodiment may be SRSs in single-DCI based multi-TRP PUSCH repetition, for example.

The SRS of this embodiment may be SRSs in single/multi-DCI based STxMP PUSCHs, for example.

This embodiment is broadly categorized into options 7-0 to 7-4 below. A UE/base station may follow at least one of options 7-0 to 7-4 below.

<<Option 7-0>>

A plurality of (two) power control settings need not be applied to SRSs.

A UE need not apply a plurality of (two) power control settings to SRSs.

In the present disclosure, whether or not to apply a plurality of (two) power control settings to SRSs may be determined/configured for each CC/cell/BWP/band/SRS resource/SRS resource set.

In the present disclosure, a plurality of (two) power control settings need not be applied to SRSs of a specific usage. The specific usage may be at least one of CB, NCB, beam management, and antenna switching, for example.

<<Option 7-1>>

Different SRS resource sets may correspond to different TRPs/panels.

In this case, a first power control setting may correspond to a first (CB/NCB) SRS resource set.

A second power control setting may correspond to a second (CB/NCB) SRS resource set.

The first (CB/NCB) SRS resource set may be an SRS resource set corresponding to a lower (or higher) SRS resource set ID.

The second (CB/NCB) SRS resource set may be an SRS resource set corresponding to a higher (or lower) SRS resource set ID.

<<Option 7-2>>

Different SRS resources in an SRS resource set may correspond to different TRPs/panels.

In this case, a first power control setting may correspond to a first SRS resource (group) in an SRS resource set.

A second power control setting may correspond to a second SRS resource (group) in the SRS resource set.

The first (CB/NCB) SRS resource group may include first K (CB/NCB) SRS resources in the SRS resource set. The first (CB/NCB) SRS resource group may include lower (or higher) first K (CB/NCB) SRS resources.

The second (CB/NCB) SRS resource group may mean SRS resources other than the first K (CB/NCB) SRS resources in the SRS resource set.

K may be defined in a specification in advance or may be configured for/indicated to the UE by a network. For example, K may be determined based on rank indication of the plurality of (two) panels.

<<Option 7-3>>

A first power control setting may correspond to a first panel.

A second power control setting may correspond to a second panel.

The first panel may be a panel corresponding to a lower (or higher) ID related to panel.

The second panel may be a panel corresponding to a higher (lower) ID related to panel.

In a case of using the first/second panel for an SRS, the UE may determine to use the first/second power control setting for the SRS.

<<Option 7-4>>

A first power control setting may correspond to a first CORESET pool index.

A second power control setting may correspond to a second CORESET pool index.

The first CORESET pool index may be a CORESET pool index of a smaller (or larger) value

The second CORESET pool index may be a CORESET pool index of a larger (or smaller) value

For example, when the first CORESET pool index (for example, the CORESET pool index of a first value (for example, 0)) is associated with an SRS, the UE may determine that the first power control setting is used for the SRS.

For example, when the second CORESET pool index (for example, the CORESET pool index of a second value (for example, 1)) is associated with an SRS, the UE may determine that the second power control setting is used for the SRS.

Note that option 7-4 may be applied only to a case of using multi-DCI.

According to the seventh embodiment above, it is possible to appropriately control transmission power of SRSs.

<Supplements>

{Notification of Information to UE}

Notification of any information to a UE (from a network (NW) (for example, a base station (BS))) (in other words, reception of any information from the BS in the UE) in the above-described embodiments may be performed by using physical layer signaling (for example, DCI), higher layer signaling (for example, RRC signaling, MAC CE), a specific signal/channel (for example, a PDCCH, a PDSCH, a reference signal), or a combination of these.

When the notification is performed by a MAC CE, the MAC CE may be identified by a new logical channel ID (LCID) not defined in an existing standard being included in a MAC subheader.

When the notification is performed by DCI, the notification may be performed by a specific field of the DCI, a radio network temporary identifier (RNTI) used for scrambling of cyclic redundancy check (CRC) bits given to the DCI, the format of the DCI, or the like.

Notification of any information to a UE in the above-described embodiments may be performed periodically, semi-persistently, or aperiodically.

{Notification of Information from UE}

Notification of any information from a UE (to an NW) (in other words, transmission/reporting of any information to the BS from the UE) in the above-described embodiments may be performed by using physical layer signaling (for example, UCI), higher layer signaling (for example, RRC signaling, MAC CE), a specific signal/channel (for example, a PUCCH, a PUSCH, a PRACH, a reference signal), or a combination of these.

When the notification is performed by a MAC CE, the MAC CE may be identified by a new LCID not defined in an existing standard being included in a MAC subheader.

When the notification is performed by UCI, the notification may be transmitted by using a PUCCH or a PUSCH.

Notification of any information from a UE in the above-described embodiments may be performed periodically, semi-persistently, or aperiodically.

{Regarding Application of Each Embodiment}

At least one of the above-described embodiments may be applied to a case satisfying a specific condition. The specific value may be defined in a standard, or a UE/BS may be notified of the specific condition by using higher layer signaling/physical layer signaling.

At least one of the above-described embodiments may be applied only to a UE that has reported a specific UE capability or that supports the specific UE capability.

The specific UE capability may indicate at least one of the following:

- supporting of specific processing/operation/control information (for example, two default power control parameter settings in a unified TCI state) for at least one of the embodiments above
- supporting of notification of single-TRP/multi-TRP/STxMP switching by DCI
- the number of panels supported

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or per frequency division duplex (FDD)).

At least one of the above-described embodiments may be applied when the UE is configured/activated/triggered with specific information related to the above-described embodiment (or performance of the operation of the above-described embodiment) by higher layer signaling/physical layer signaling. For example, the specific information may be information indicating enabling of two default power control parameter settings in a unified TCI state, any RRC parameter for a specific release (for example, Rel. 18/19), or the like.

When the UE does not support at least one of the specific UE capabilities above or is not configured with the specific information, operation of Rel. 15/16/17 may be applied, for example.

(Supplementary Notes A)

Regarding one embodiment of the present disclosure, the following supplementary notes of the invention will be given.

{Supplementary Note A-1}

A terminal including:

a receiving section that receives first information and second information for transmission power control of a plurality of physical uplink shared channels (PUSCHs) using a plurality of transmission/reception points (TRPs); and a control section that controls transmission power of a PUSCH corresponding to a first TRP of the plurality of TRPs, based on the first information, and controls transmission power of a PUSCH corresponding to a second TRP of the plurality of TRPs, based on the second information, when a unified Transmission Configuration Indication (TCI) state is not indicated.

{Supplementary Note A-2}

The terminal according to supplementary note A-1, wherein the PUSCHs using the plurality of TRPs are at least one of repetition of a PUSCH using the unified TCI state and PUSCHs transmitted in a same time domain by using a plurality of panels.

{Supplementary Note A-3}

The terminal according to supplementary note A-1 or A-2, wherein

the first information and the second information are included in a configuration of a terminal-specific uplink bandwidth part, and
the first information and the second information are indicated by a list of specific information.

{Supplementary Note A-4}

The terminal according to any one of supplementary notes A-1 **to A-3,** wherein the control section determines correspondences of the first information and the second information with the first TRP and the second TRP, respectively, based on a specific condition.

(Supplementary Notes B)

Regarding one embodiment of the present disclosure, the following supplementary notes of the invention will be given.

{Supplementary Note B-1}

A terminal including:

a receiving section that receives first information and second information for transmission power control of a plurality of physical uplink control channels (PUCCHs) using a plurality of transmission/reception points (TRPs); and a control section that controls a transmission power of a PUCCH corresponding to a first TRP of the plurality of TRPs, based on the first information, and controls a transmission power of a PUCCH corresponding to a second TRP of the plurality of TRPs, based on the second information, when a unified Transmission Configuration Indication (TCI) state is not indicated.

{Supplementary Note B-2}

The terminal according to supplementary note B-1, wherein the PUCCHs using the plurality of TRPs are at least one of repetition of a PUCCH using the unified TCI state and PUCCHs transmitted in a same time domain by using a plurality of panels.

{Supplementary Note B-3}

The terminal according to supplementary note B-1 or B-2, wherein

the first information and the second information are included in a configuration of a terminal-specific uplink bandwidth part, and
the first information and the second information are indicated by a list of specific information.

{Supplementary Note B-4}

The terminal according to any one of supplementary notes B-1 to B-3, wherein the control section determines correspondences of the first information and the second information with the first TRP and the second TRP, respectively, based on a specific condition.

(Supplementary Notes C)

Regarding one embodiment of the present disclosure, the following supplementary notes of the invention will be given.

{Supplementary Note C-1}

A terminal including:

a receiving section that receives first information and second information for transmission power control of a plurality of sounding reference signals (SRSs) using a plurality of transmission/reception points (TRPs); and
a control section that controls a transmission power of an SRS corresponding to a first TRP of the plurality of TRPs, based on the first information, and controls a transmission power of an SRS corresponding to a second TRP of the plurality of TRPs, based on the second information, when a unified Transmission Configuration Indication (TCI) state is not indicated.

{Supplementary Note C-2}

The terminal according to supplementary note C-1, wherein the SRSs using the plurality of TRPs are at least one of SRSs in repetition of a physical uplink shared channel (PUSCH) using the unified TCI state and SRSs in PUSCHs transmitted in a same time domain by using a plurality of panels.

{Supplementary Note C-3}

The terminal according to supplementary note C-1 or C-2, wherein

the first information and the second information are included in a configuration of a terminal-specific uplink bandwidth part, and
the first information and the second information are indicated by a list of specific information, indicate at least one of.

{Supplementary Note C-4}

The terminal according to any one of supplementary notes C-1 to C-3, wherein the control section determines correspondences of the first information and the second information with the first TRP and the second TRP, respectively, based on a specific condition.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

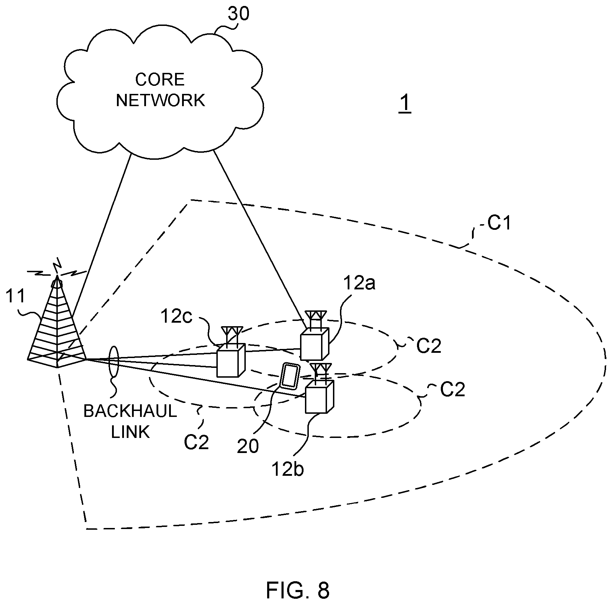

FIG. 8 is a diagram to show an example of a schematic structure of the radio communication system according to one embodiment. The radio communication system 1 (which may be referred simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control

EP 4 580 266 A1

information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

(Base Station)

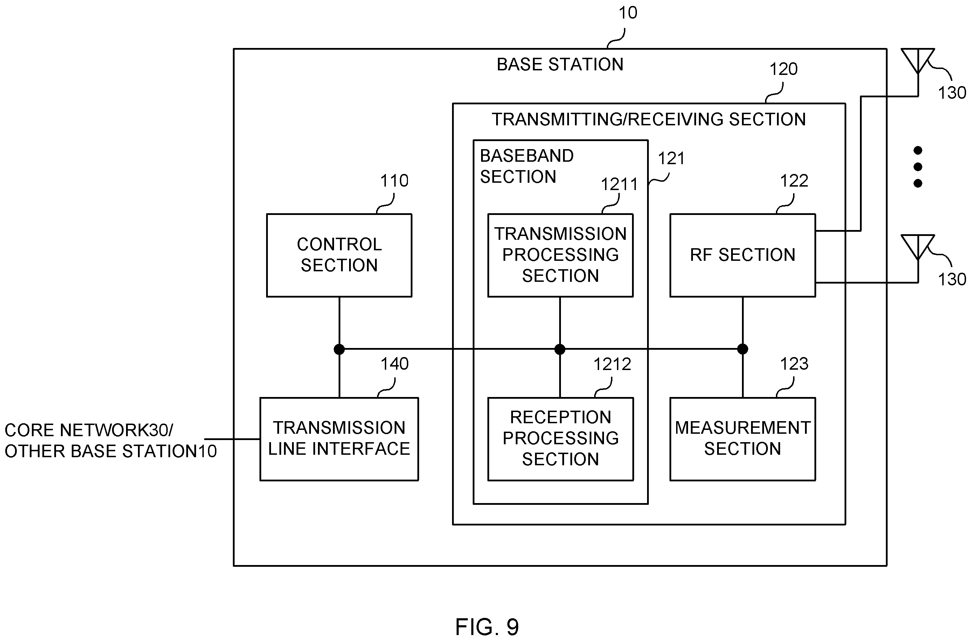

FIG. 9 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission and reception (backhaul signaling) of signals with an apparatus included in the core network 30 (for example, a network node providing an NF), or another base station 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit first information and second information for transmission power control of a plurality of physical uplink shared channels (PUSCHs) using a plurality of transmission/reception points (TRPs). The control section 110 may indicate a transmission power of a PUSCH corresponding to a first TRP of the plurality of TRPs by using the first information, and indicate a transmission power of a PUSCH corresponding to a second TRP of the plurality of TRPs by using the second information, when a unified Transmission Configuration Indication (TCI) state is not indicated.

The transmitting/receiving section 120 may transmit first information and second information for transmission power control of a plurality of physical uplink control channels (PUCCHs) using a plurality of transmission/reception points (TRPs). The control section 110 may indicate a transmission power of a PUCCH corresponding to a first TRP of the plurality of TRPs by using the first information, and indicate a transmission power of a PUCCH corresponding to a second TRP of the plurality of TRPs by using the second information, when a unified Transmission Configuration Indication (TCI) state is not indicated.

The transmitting/receiving section 120 may transmit first information and second information for transmission power control of a plurality of sounding reference signals (SRSs) using a plurality of transmission/reception points (TRPs). The control section 110 may indicate transmission power of an SRS corresponding to a first TRP of the plurality of TRPs by using the first information, and indicate transmission power of an SRS corresponding to a second TRP of the plurality of TRPs by using the second information, when a unified Transmission Configuration Indication (TCI) state is not indicated.

(User Terminal)

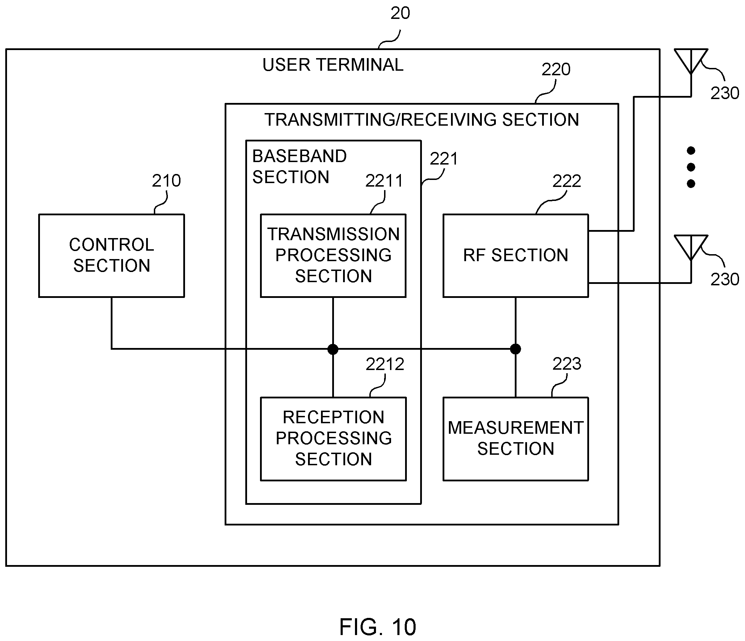

FIG. 10 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive first information and second information for transmission power control of a plurality of physical uplink shared channels (PUSCHs) using a plurality of transmission/reception points (TRPs). The control section 210 may control a transmission power of a PUSCH corresponding to a first TRP of the plurality of TRPs, based on the first information, and control a transmission power of a PUSCH corresponding to a second TRP of the plurality of TRPs, based on the second information, when a unified Transmission Configuration Indication (TCI) state is not indicated.

The PUSCHs using the plurality of TRPs may be at least one of repetition of a PUSCH using the unified TCI state and PUSCHs transmitted in a same time domain by using a plurality of panels.

The first information and the second information may be included in a configuration of a terminal-specific uplink bandwidth part. The first information and the second information may be indicated by a list of specific information.

The control section 210 may determine correspondences of the first information and the second information with the first TRP and the second TRP, respectively, based on specific information.

The transmitting/receiving section 220 may receive first information and second information for transmission power control of a plurality of physical uplink control channels (PUCCHs) using a plurality of transmission/reception points (TRPs). The control section 210 may control a transmission power of a PUCCH corresponding to a first TRP of the plurality of TRPs, based on the first information, and control a transmission power of a PUCCH corresponding to a second TRP of the plurality of TRPs, based on the second information, when a unified Transmission Configuration Indication (TCI) state is not indicated.

The PUCCHs using the plurality of TRPs may be at least one of repetition of a PUCCH using the unified TCI state and PUCCHs transmitted in a same time domain by using a plurality of panels.

The first information and the second information may be included in a configuration of a terminal-specific uplink bandwidth part. The first information and the second information may be indicated by a list of specific information.

The control section 210 may determine correspondences between the first information and the second information, and the first TRP and the second TRP, based on specific information.

The transmitting/receiving section 220 may receive first information and second information for transmission power control of a plurality of sounding reference signals (SRSs) using a plurality of transmission/reception points (TRPs). The control section 210 may control transmission power of an SRS corresponding to a first TRP of the plurality of TRPs, based on the first information, and control transmission power of an SRS corresponding to a second TRP of the plurality of TRPs, based on the second information, when a unified Transmission Configuration Indication (TCI) state is not indicated.

The SRSs using the plurality of TRPs may be at least one of SRSs in repetition of a physical uplink shared channel (PUSCH) using the unified TCI state and SRSs in PUSCHs transmitted in a same time domain by using a plurality of panels.

The first information and the second information may be included in a configuration of a terminal-specific uplink bandwidth part. The first information and the second information may be indicated by a list of specific information.

The control section 210 may determine correspondences between the first information and the second information, and the first TRP and the second TRP, based on specific information.

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

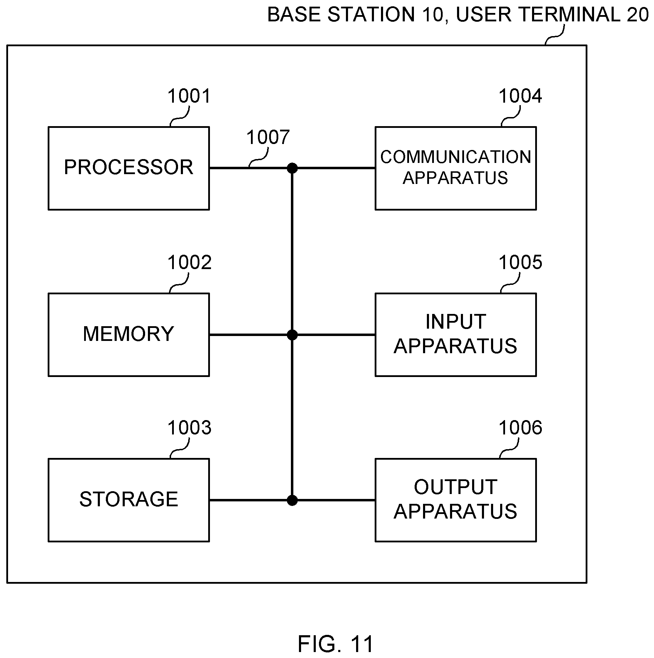

For example, a base station, a user terminal, and so on according to one embodiment of the present disclosure may function as a computer that executes the processes of the radio communication method of the present disclosure. FIG. 11 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

(Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a given signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to given values, or may be expressed using another corresponding information. For example, a radio resource may be specified by a given index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of given information (for example, notification of "X") does not necessarily have to be performed explicitly, and can be performed implicitly (by, for example, not reporting this given information or reporting another piece of information).

A decision may be realized by a value (0 or 1) represented by one bit, by a boolean value (true or false), or by comparison of numerical values (e.g., comparison with a given value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

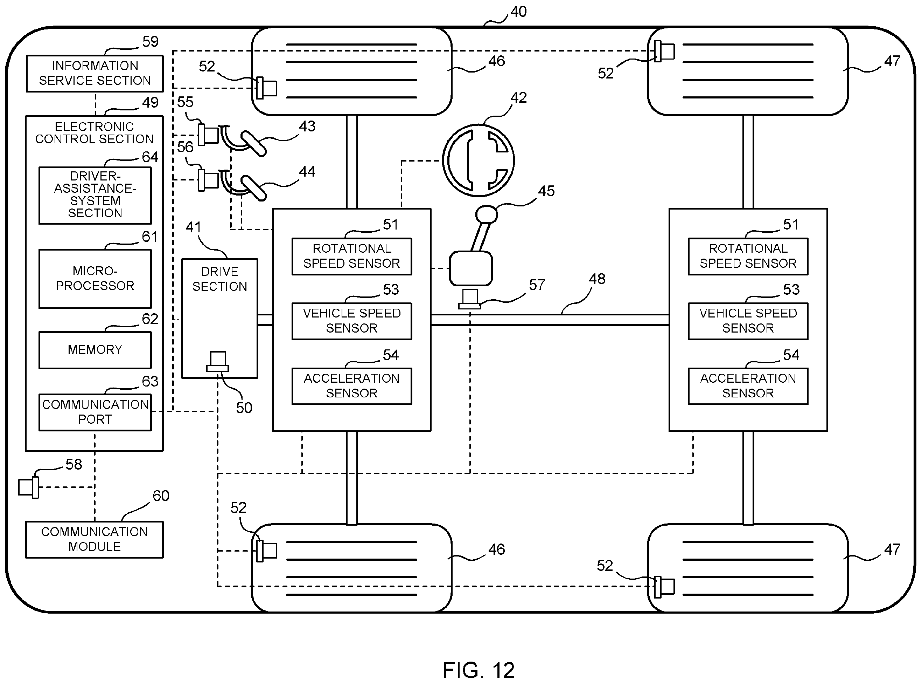

FIG. 12 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

This application is based on and claims priority to Japanese Patent Application No. 2022-132834, filed on August 23, 2022, the contents of which are incorporated herein by reference in their entirety.

**Claims**

1. A terminal comprising:

   a receiving section that receives first information and second information for transmission power control of a plurality of sounding reference signals (SRSs) using a plurality of transmission/reception points (TRPs); and
   a control section that controls a transmission power of an SRS corresponding to a first TRP of the plurality of TRPs, based on the first information, and controls a transmission power of an SRS corresponding to a second TRP of the plurality of TRPs, based on the second information, when a unified Transmission Configuration Indication (TCI) state is not indicated.

2. The terminal according to claim 1, wherein
   the SRSs using the plurality of TRPs are at least one of SRSs in repetition of a physical uplink shared channel (PUSCH) using the unified TCI state and SRSs in PUSCHs transmitted in a same time domain by using a plurality of panels.

3. The terminal according to claim 1, wherein

   the first information and the second information are included in a configuration of a terminal-specific uplink bandwidth part, and
   the first information and the second information are indicated by a list of specific information.

4. The terminal according to claim 1, wherein
   the control section determines correspondences of the first information and the second information with the first TRP and the second TRP, respectively, based on specific information.

5. A radio communication method for a terminal, the radio communication method comprising:

   receiving first information and second information for transmission power control of a plurality of sounding reference signals (SRSs) using a plurality of transmission/reception points (TRPs); and

controlling a transmission power of an SRS corresponding to a first TRP of the plurality of TRPs, based on the first information, and controlling a transmission power of an SRS corresponding to a second TRP of the plurality of TRPs, based on the second information, when a unified Transmission Configuration Indication (TCI) state is not indicated.

6. A base station comprising:

a transmitting section that transmits first information and second information for transmission power control of a plurality of sounding reference signals (SRSs) using a plurality of transmission/reception points (TRPs); and

a control section that indicates transmission power of an SRS corresponding to a first TRP of the plurality of TRPs by using the first information, and indicates transmission power of an SRS corresponding to a second TRP of the plurality of TRPs by using the second information, when a unified Transmission Configuration Indication (TCI) state is not indicated.

EP 4 580 266 A1

FIG. 1A

configuration
for DL&UL
(RRC)

activation
for DL&UL
(MAC CE)

SSB/
CSI-RS/
SRS

active TCI pool for DL&UL

joint indication

indication
for DL&UL
(DCI)

one or
subset of
all DL&UL

FIG. 1B

configuration
for DL&UL
(RRC)

activation
for DL/UL
(MAC CE)

SSB/
CSI-RS/
SRS

active TCI pool for
DL&UL, or
separate active TCI pools
for DL&UL

separate indication

indication
for DL
(DCI)

one or
subset of
all DL

indication
for UL
(DCI)

one or
subset of
all UL

## FIG. 2A

Joint DL/UL TCI state

| TCI field value | Joint DL/UL TCI state |
|---|---|
| 000 | TCI#0 |
| 001 | TCI#1 |
| 010 | TCI#2 |
| 011 | TCI#3 |
| 100 | TCI#4 |
| 101 | TCI#5 |
| 110 | TCI#6 |
| 111 | TCI#7 |

## FIG. 2B

Separate DL/UL TCI state

| TCI field value | DL only TCI state | UL only TCI state | |
|---|---|---|---|
| 000 | TCI#0 | - | DL TCI state |
| 001 | TCI#1 | - | |
| 010 | - | TCI#2 | UL TCI state |
| 011 | - | TCI#3 | |
| 100 | TCI#4 | TCI#5 | |
| 101 | TCI#6 | TCI#7 | Both of DL TCI state and UL TCI state |
| 110 | TCI#8 | TCI#9 | |
| 111 | TCI#10 | TCI#11 | |

FIG. 3A

FIG. 3B

FIG. 3C

FIG. 4A

PUCCH RESOURCE #1

PANEL/BEAM #1

TRP#1

PANEL/BEAM #2

PUCCH RESOURCE #2

TRP#2

FIG. 4B

PUCCH RESOURCES

PANEL/BEAM #1

TRP#1

PANEL/BEAM #2

TRP#2

EP 4 580 266 A1

FIG. 5A

```
BWP-UplinkDedicated ::=          SEQUENCE {
......
   ul-TCI-StateList-r17              CHOICE {
     explicitlist                      SEQUENCE {
        ul-TCI-ToAddModList-r17          SEQUENCE (SIZE (1..maxUL-TCI-r17)) OF TCI-UL-State-r17       OPTIONAL,  -- Need N
        ul-TCI-ToReleaseList-r17         SEQUENCE (SIZE (1..maxUL-TCI-r17)) OF TCI-UL-State-Id-r17    OPTIONAL   -- Need N
     },
     unifiedTCI-StateRef-r17        ServingCellAndBWP-Id-r17
   }                                                                                                  OPTIONAL,  -- Need R
   ul-powerControl-r17            Uplink-powerControlId-r17                                           OPTIONAL,  -- Cond NoTCI-PC
......
}
```

FIG. 5B

```
Uplink-powerControl-r17  ::= SEQUENCE {
   ul-powercontrolId-r17          Uplink-powerControlId-r17,
   p0AlphaSetforPUSCH-r17         P0AlphaSet-r17            OPTIONAL, -- Need R
   p0AlphaSetforPUCCH-r17         P0AlphaSet-r17            OPTIONAL, -- Need R
   p0AlphaSetforSRS-r17           P0AlphaSet-r17            OPTIONAL  -- Need R
}


P0AlphaSet-r17 ::=        SEQUENCE {
   p0-r17                         INTEGER (-16..15)         OPTIONAL, -- Need R
   alpha-r17                      Alpha                     OPTIONAL, -- Need R
   closedLoopIndex-r17            ENUMERATED { i0, i1 }
}
```

EP 4 580 266 A1

```
BWP-UplinkDedicated ::=         SEQUENCE {
......
   ul-TCI-StateList-r17            CHOICE {
      explicitlist                    SEQUENCE {
         ul-TCI-ToAddModList-r17          SEQUENCE (SIZE (1..maxUL-TCI-r17)) OF TCI-UL-State-r17      OPTIONAL,  -- Need N
         ul-TCI-ToReleaseList-r17         SEQUENCE (SIZE (1..maxUL-TCI-r17)) OF TCI-UL-State-Id-r17    OPTIONAL   -- Need N
      },
      unifiedTCI-StateRef-r17      ServingCellAndBWP-Id-r17
   }                                                                                                  OPTIONAL,  -- Need R
   ul-powerControl-r17           Uplink-powerControlId-r17                                            OPTIONAL,  -- Cond
NoTCI-PC    -> Rel-17 parameter is used for TRP1
   ul-powerControl-TRP2-r18    Uplink-powerControlId-r17                                              OPTIONAL,  -- Cond
NoTCI-PC    -> new Rel-18 parameter is used for TRP2
......
}
```

FIG. 6

EP 4 580 266 A1

```
BWP-UplinkDedicated ::=      SEQUENCE {
......
    ul-TCI-StateList-r17           CHOICE {
        explicitlist                   SEQUENCE {
            ul-TCI-ToAddModList-r17        SEQUENCE (SIZE (1..maxUL-TCI-r17)) OF TCI-UL-State-r17       OPTIONAL,  -- Need N
            ul-TCI-ToReleaseList-r17       SEQUENCE (SIZE (1..maxUL-TCI-r17)) OF TCI-UL-State-Id-r17     OPTIONAL   -- Need N
        },
        unifiedTCI-StateRef-r17     ServingCellAndBWP-Id-r17
    }
    ul-powerControl-r17          Uplink-powerControlId-r17       OPTIONAL,  -- Cond NoTCI-PC -> Rel-17 parameter is used
for S-TRP (when one UL TCI or joint DL-UL TCI is indicated)
    ul-powerControl-MTRP-r18   SEQUENCE (SIZE (1..maxDefaultPCsettings)) Uplink-powerControlId-r17 OPTIONAL,  -- Cond
NoTCI-PC    -> new Rel-18 parameter for M-TRP (when two UL TCIs or joint DL-UL TCIs are indicated)
......
}
```

FIG. 7

FIG. 8

FIG. 9

EP 4 580 266 A1

FIG. 10

BASE STATION 10, USER TERMINAL 20

1001

PROCESSOR

1007

COMMUNICATION
APPARATUS

1004

1002

MEMORY

1005

INPUT
APPARATUS

1003

STORAGE

1006

OUTPUT
APPARATUS

FIG. 11

FIG. 12

## INTERNATIONAL SEARCH REPORT

| International application No. |
|---|
| **PCT/JP2023/026409** |

### A.   CLASSIFICATION OF SUBJECT MATTER

*H04W 52/18*(2009.01)i; *H04W 28/16*(2009.01)i; *H04W 72/21*(2023.01)i
FI:   H04W52/18; H04W28/16; H04W72/21

According to International Patent Classification (IPC) or to both national classification and IPC

### B.   FIELDS SEARCHED

Minimum documentation searched (classification system followed by classification symbols)

H04W52/18; H04W28/16; H04W72/21

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C.   DOCUMENTS CONSIDERED TO BE RELEVANT

| Category* | Citation of document, with indication, where appropriate, of the relevant passages | Relevant to claim No. |
|---|---|---|
| X | HUAWEI. HISILICON. Discussion on unified TCI framework extension for multi-TRP. 3GPP TSG RAN WG1 #110 R1-2205879. 12 August 2022<br>in particular, 2.4.3, 2, 4.4, 4.1, 4.2 | 1-6 |
| Y | | 3 |
| X | VIVO. Discussion on unified TCI framework extension for multi-TRP. 3GPP TSG RAN WG1 #110 R1-2206024. 12 August 2022<br>in particular, 2.4 | 1, 2, 4-6 |
| Y | | 3 |
| Y | ERICSSON. Unified TCI framework extension for multiple TCI states. 3GPP TSG RAN WG1 #110 R1-2206246. 12 August 2022<br>in particular, 2.4 | 3 |

☐ Further documents are listed in the continuation of Box C.      ☐ See patent family annex.

| | |
|---|---|
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| **01 September 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022132834 A

**Non-patent literature cited in the description**

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0*, April 2010